(19) Europäisches Patentamt
European Patent Office
Office européen des brevets

(11) **EP 4 588 744 A1**

(12) **EUROPÄISCHE PATENTANMELDUNG**

(43) Veröffentlichungstag:
23.07.2025 Patentblatt 2025/30

(21) Anmeldenummer: 24154496.4

(22) Anmeldetag: **29.01.2024**

(51) Internationale Patentklassifikation (IPC):
*B60W 30/16* (2020.01)   *B60W 30/18* (2012.01)
*B60W 50/00* (2006.01)

(52) Gemeinsame Patentklassifikation (CPC):
**B60W 30/16; B60W 30/18145; B60W 50/0097;**
B60W 2420/408; B60W 2520/10; B60W 2520/12;
B60W 2520/14; B60W 2540/18; B60W 2554/802;
B60W 2554/804

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **18.01.2024 DE 102024101401**

(71) Anmelder: **IAV GmbH**
**Ingenieurgesellschaft Auto und Verkehr**
**10587 Berlin (DE)**

(72) Erfinder:
• **Hofmann, Ralf**
**76887 Bad Bergzabern (DE)**
• **Ranke, Martin**
**71229 Leonberg (DE)**

• **Ostertag, Felix**
**75378 Bad Liebenzell (DE)**
• **Tetinou, Flora**
**75378 Bad Liebenzell (DE)**
• **Usmani, Sarah**
**75175 Pforzheim (DE)**
• **Aissa, Amine Mohamed**
**71287 Weissbach (DE)**
• **Saptarshi, Shraddha**
**70327 Stuttgart (DE)**
• **Koch, Joscha**
**70435 Stuttgart (DE)**
• **Tillmann, Steffen**
**70734 Fellbach (DE)**

(74) Vertreter: **Wanzek, Jan**
**IAV GmbH**
**Ingenieurgesellschaft Auto und Verkehr**
**Entwicklungszentrum Chemnitz/Stollberg**
**Auer Straße 54**
**09366 Stollberg (DE)**

(54) **FAHRTREGELUNGSVORRICHTUNG UND VERFAHREN ZUM REGELN DER GESCHWINDIGKEIT EINES FAHRZEUGS**

(57) Fahrtregelungsvorrichtung (180) für ein Ego-Fahrzeug (100), die eine abstandsbasierte Geschwindigkeitsregelungsfunktion (ACC) ausführt, um das Ego-Fahrzeug (100) in einer Folgefahrt, in Abhängigkeit der Fahrt eines vorausfahrenden Zielfahrzeuges (101) zu regeln, umfassend einen Erfassungsabschnitt (181), der die Bewegung des vorausfahrenden Zielfahrzeuges (101) erfasst; einen ersten Bewegungsprädiktionsabschnitt (182), der eine Trajektorie (108) des Ego-Fahrzeuges (100) ermittelt; einen Verlustprädiktionsabschnitt (183), der ein Zielobjektverlust (ZOV) des vorausfahrenden Zielfahrzeuges (101) für einen in der Zukunft liegenden Zeitpunkt vorherbestimmt und den vorherbestimmten Zielobjektverlust (ZOV) in einen trivialen Zielobjektverlust (t-ZOV) oder einen nicht-trivialen Zielobjektverlust (nt-ZOV) kategorisiert; einen zweiten Bewegungsprädiktionsabschnitt (184), der eine virtuelle Trajektorie (109) des vorausfahrenden Zielfahrzeuges (101) vorherbestimmt, diese erfassungsrelevant deformiert sowie einen Geschwindigkeitsregelungsabschnitt (185), der die Geschwindigkeit des Ego-Fahrzeuges (100), regelt.

Fig. 2B

# EP 4 588 744 A1

## Beschreibung

### Technisches Gebiet

Die Erfindung bezieht sich auf Fahrzeuge im Allgemeinen, insbesondere auf Untereinheiten, die die Fahrzeuggeschwindigkeit automatisch regeln sowie insbesondere auf ein Verfahren zur Regelung der Geschwindigkeit durch eine entsprechende Fahrtregelungsvorrichtung.

### Hintergrund

Fahrtregelungsvorrichtungen, die eingerichtet sind, um die Fahrzeuggeschwindigkeit automatisch zu regeln oder zu verhindern, dass eine willkürlich festgelegte Geschwindigkeit überschritten, oder diese gehalten wird, sind beispielsweise als Abstandsregeltempomaten oder auch ACC-Systeme ("Adaptive Cruise Control") bekannt. Eine entsprechende Abstands- und Geschwindigkeitsregelungsfunktion (ACC) ist beispielsweise innerhalb einer SAE-Level 1 Fahrassistenzfunktion ("Society of Automotive Engineers") definiert als eine Funktion, die eingerichtet ist, um den Abstand eines zu regelnden Fahrzeuges, oder auch des Ego-Fahrzeuges, zu einem vorausfahrenden Fahrzeug automatisch zu regeln, gemäß einem vorgegebenen Zeitintervall sowie der aktuellen Geschwindigkeit. Eine entsprechende Fahrtregelungsvorrichtung ist auch als Geschwindigkeitsregelungsanlage mit longitudinaler Distanzregelung bekannt.

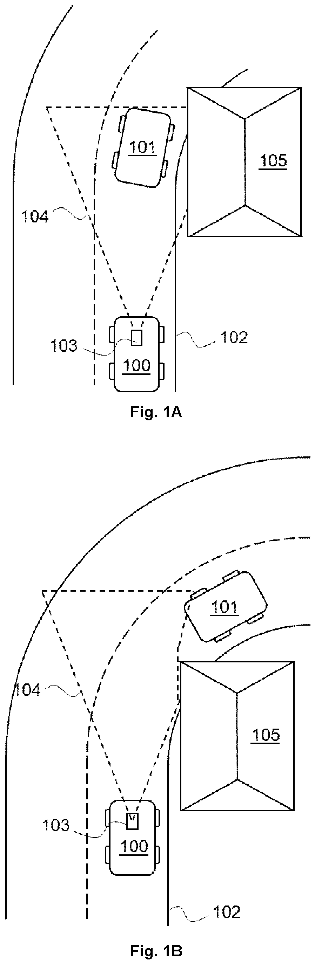

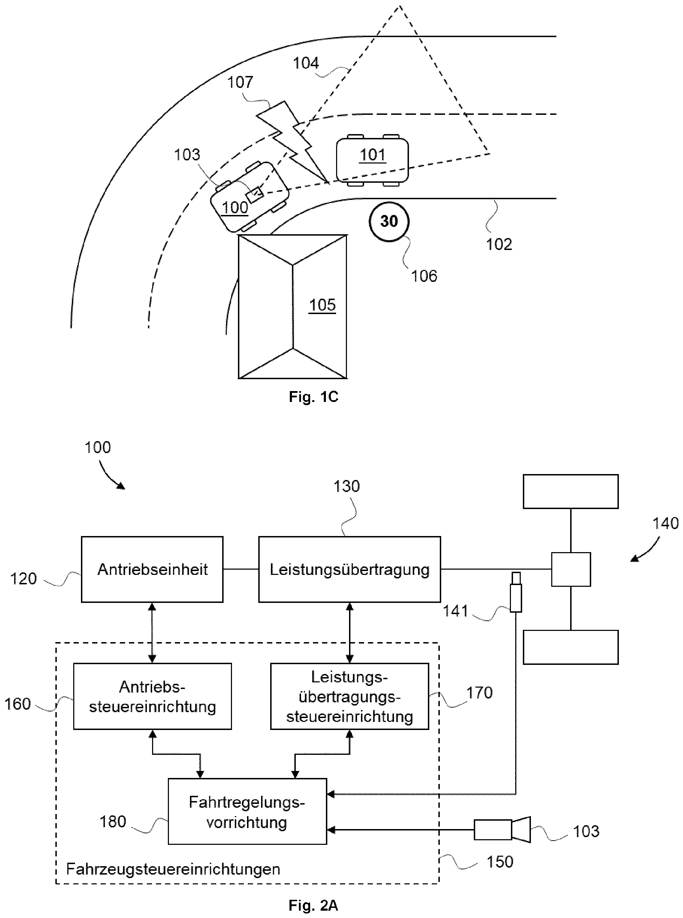

Bezugnehmend auf Fig. 1A - 1C werden innerhalb der ACC-Funktion eines Ego-Fahrzeuges (100) Eingangsgrößen verarbeitet, welche der im betreffenden Fahrzeug (100) verbauten Sensorik (103) zum Erfassen der Bewegung des Ego-Fahrzeuges (100) und von dessen Umfeld entstammen. Die Nichtmehrerkennung eines vorausfahrenden Fahrzeuges (101) oder auch Zielfahrzeuges, ist als Zielobjektverlust (ZOV) bekannt. Bei einem Zielobjektverlust (ZOV) wird die angeforderte Fahrzeuggeschwindigkeit beispielsweise diskontinuierlich auf eine willkürlich festgelegte, höhere Sollgeschwindigkeit geregelt und damit eine Beschleunigung des Ego-Fahrzeuges (100) eingeleitet. Aufgrund physikalischer Erfassungsgrenzen der fahrzeuginternen Erfassungssensorik (103), beispielsweise beeinflusst durch die Entfernung von Objekten oder Hindernissen (105) zum Ego-Fahrzeug (100) oder der Winkel- / Raumabdeckung der Fahrzeugumgebung, wie lateral versetztes Fahren oder der Geometrie der Fahrbahn (102) selbst, kann innerhalb der Fahrzeugsteuereinrichtung ein Zielobjektverlust (ZOV) entstehen, obwohl sich das vorausfahrende Zielfahrzeug (101) weiterhin in unmittelbarer Nähe sowie auf derselben Fahrspur der Fahrbahn (102) des Ego-Fahrzeuges (100) befindet. Dieser Fall tritt insbesondere bei Kurven- und Kuppenfahrten oder auch beim lateral versetzten Fahren auf. Wird das vorausfahrende Zielfahrzeug (101) von der fahrzeuginternen Erfassungssensorik (103) wiedererkannt (107), kann es zu erhöhten fahrdynamischen Beeinträchtigungen, durch Verzögerungen oder Rucken und somit zu Einschränkungen des Fahrkomforts und der Fahrsicherheit für die Fahrzeuginsassen kommen. Entsprechende Fahrtregelanlagen unterliegen daher ständiger Weiterentwicklung der Regelung, um die Komfortabilitäts- und Sicherheitseigenschaften zu verbessern. Zusätzlich ist das kurzzeitige Beschleunigen auf eine höhere Sollgeschwindigkeit und das anschließende Abbremsen im Falle eines Zielobjektverlustes (ZOV) mit anschließender Wiedererkennung unökonomisch.

### Stand der Technik

Durch die Offenlegungsschrift DE 10 2005 032 182 A1 ist eine Fahrtregelungsvorrichtung bekannt, wobei bei einem ZOV die Beschleunigung des Ego-Fahrzeuges für eine bestimmte Abbruchzeit verhindert wird, wobei die Abbruchzeit von einer Querbeschleunigung des zu regelnden Fahrzeuges abhängig ist.

Durch die Offenlegungsschrift DE 10 2007 031 544 A1 ist eine Fahrtregelungsvorrichtung bekannt, wobei bei einem Übergang von einer Folgefahrt, in Abhängigkeit der Fahrt eines vorausfahrenden Zielfahrzeuges, in eine Freifahrt, ohne ein vorausfahrendes Zielfahrzeug, die Sollgeschwindigkeit der Geschwindigkeitsregelungseinrichtung auf den Wert der Fahrzeuggeschwindigkeit, unmittelbar vor dem Übergang festgelegt wird.

Durch die Offenlegungsschrift DE 10 2017 007 504 A1 ist eine Fahrtregelungsvorrichtung für ein Ego-Fahrzeug bekannt, die eingerichtet ist, um eine abstandsbasierte Geschwindigkeitsregelungsfunktion (ACC) in Bezug auf ein vorausfahrendes Zielfahrzeug vorzunehmen, die von einer primären Geschwindigkeitsregelung in Abhängigkeit erfasster Witterungs- und Fahrbahnbedingungen ersetzt werden kann.

Die durch den aufgezeigten Stand der Technik bekannten Fahrtregelungsvorrichtungen fokussieren insbesondere auf Eingriffe in die Steuerung der Geschwindigkeitsregelung oder in die Fahrdynamik des Ego-Fahrzeuges als eine Reaktion auf einen ZOV oder eine entsprechend erkannte Fahrsituation. Durch dieses reaktive Verhalten können die dargestellten Steuerungsmaßnahmen des Ego-Fahrzeuges frühestens ab dem Zeitpunkt der Erfassung der entsprechenden Fahrsituation ausgeführt werden und sind somit von den technischen Eigenschaften der Sensorik abhängig.

**Kurzdarstellung**

Es ist die Aufgabe der vorliegenden Erfindung die Erfassung einer Fahrsituation, insbesondere eines Zielobjektverlustes (ZOV) und der Wiedererkennung des Zielobjektes zu verbessern sowie frühzeitig und spekulativ vorherzubestimmen, wodurch die Reaktionszeit für genannte reaktive Steuerungs- und Regelungsmaßnahmen durch die erfindungsgemäße Fahrtregelungsvorrichtung verringert und der Fahrkomfort, die Fahrsicherheit sowie die Fahrökonomie erhöht werden. Diese Aufgabe wird durch eine Fahrtregelungsvorrichtung nach Anspruch 1, ein Verfahren zur Regelung der Geschwindigkeit eines Fahrzeuges nach Anspruch 11 sowie ein Fahrzeug nach Anspruch 14 dadurch gelöst, dass die Bewegung eines vorausfahrenden Zielfahrzeuges (101), das in einer Fahrtrichtung des Ego-Fahrzeuges (100) vor diesem fährt, erfasst wird und wobei eine erste Trajektorie (108) des Ego-Fahrzeuges (100), in Abhängigkeit von der Geschwindigkeitsregelungsfunktion (ACC) ermittelt sowie ein Zielobjektverlust (ZOV) des vorausfahrenden Zielfahrzeuges (101), in Abhängigkeit der erfassten Bewegung des vorausfahrenden Zielfahrzeuges (101) und der berechneten Trajektorie (108) des Ego-Fahrzeuges (100), für einen in der Zukunft liegenden Zeitpunkt vorherbestimmt wird, wobei der vorhergesagte Zielobjektverlust (ZOV) kategorisiert wird, wobei eine zweite, virtuelle Trajektorie (109) des vorausfahrenden Zielfahrzeuges (101), in Abhängigkeit der erfassten Bewegung jenes vorausfahrenden Zielfahrzeuges (101), der berechneten Trajektorie (108) des Ego-Fahrzeuges (100) und des vorherbestimmten Zielobjektverlustes (ZOV) ermittelt wird, wobei die Geschwindigkeit des Ego-Fahrzeuges (100), in Abhängigkeit des vorherbestimmten Zielobjektverlustes (ZOV), dessen Kategorisierung und der ermittelten virtuellen (109) Trajektorie des vorausfahrenden Fahrzeuges (101) geregelt wird.

**Kurzbeschreibung der Zeichnungen**

Fig. 1A - 1C zeigen eine Fahrsituation, welche zu einem nicht trivialen Zielobjektverlust führt.

Fig. 2A zeigt den schematischen Aufbau eines Fahrzeuges, umfassend die erfindungsgemäße Fahrtregelungsvorrichtung.

Fig. 2B zeigt den schematischen Aufbau der erfindungsgemäßen Fahrtregelungsvorrichtung.

Fig. 2C zeigt den auszugsweisen, schematischen Aufbau eines Computersystems.

Fig. 3 zeigt den Aufbau des Encoder-Decoder-LSTM-Modells der Streckenverlaufsprädiktion.

Fig. 4 zeigt den Aufbau eines RNN-LSTM-Modells zur Erkennung und Kategorisierung von Zielobjektverlusten.

Fig. 5 zeigt den Geschwindigkeits- und Beschleunigungsverlauf einer virtuellen Trajektorie, bei einem nicht trivialen Zielobjektverlust.

Fig. 6 zeigt den Prozessablauf des erfindungsgemäßen Verfahrens zur Regelung der Geschwindigkeit eines Fahrzeuges.

Fig. 7A - B zeigt ein Ausführungsbeispiel für das erfindungsgemäße Verfahren gemäß einer schematisch dargestellten Fahrsituation.

**Detaillierte Beschreibung**

Zunächst wird der schematische Aufbau des Ego-Fahrzeuges (100) beschrieben, welches die Fahrtregelungsvorrichtung (180) gemäß einem Ausführungsbeispiel umfasst. Fig. 2A zeigt hierzu ein Blockdiagramm, dass einen beispielhaften schematischen Aufbau des Ego-Fahrzeuges (100) abbildet, dass die erfindungsgemäße Fahrtregelungsvorrichtung (180) gemäß einer Ausführungsform umfasst. Die einzelnen dargestellten Elemente des Blockdiagramms sind nicht als abschließend zu verstehen, viel mehr beschränkt sich die dargestellte Ausführungsform des erfindungsgemäßen Ego-Fahrzeuges (100) auf Elemente, welche in funktionstechnischer Verbindung mit der erfindungsgemäßen Fahrtregelungsvorrichtung (180) gemäß dieser Ausführungsform stehen. So umfasst ein erfindungsgemäßes Ego-Fahrzeug (100) beispielsweise eine oder mehrere der nachfolgend aufgezählten Elemente, wie eine Antriebseinheit (120), eine Leistungsübertragung (130), ein Fahrwerk (140), eine Fahrzeugsteuereinrichtung (150), umfassend beispielsweise eine Antriebssteuereinrichtung (160), eine Leistungsübertragungssteuereinrichtung (170), eine erfindungsgemäße Fahrtregelungsvorrichtung (180) sowie fahrzeuginterne Sensorik, wie eine Erfassungssensorik (103) und eine Fahrzeugsensorik (141).

Eine Antriebseinheit (120) kann gemäß einigen Ausführungsformen technische Komponenten wie einen Verbrennungsmotor, eine elektrische Maschine, einen hybriden Antriebstrang oder sonstige technische Komponenten umfassen, die dazu eingerichtet sind, um für das erfindungsgemäße Ego-Fahrzeug (100) eine mechanische oder elektrische Leistung für den Antrieb bereitzustellen. Eine Leistungsübertragung (130) kann gemäß einigen Ausführungsformen eine Kupplung, ein Getriebe, eine Kardanwelle, ein Differentialgetriebe und ein Fahrwerk (140), Antriebswellen sowie Räder umfassen. Leistungsübertragung (130) und Fahrwerk (140) sind im Wesentlichen dazu eingerichtet, um die von der Antriebseinheit (120) abgegebene mechanische oder elektrische Energie in einen Antrieb des Ego-Fahrzeuges (100) umzuwandeln oder auch, um die Leistung der Antriebseinheit (120) auf die Räder zu übertragen.

Die Erfassungssensorik (103) kann gemäß einigen Ausführungsformen technische Komponenten wie eine Kamera, RADAR- oder LiDAR-Sensoren, aber auch Infrarot- oder Ultraschallsensoren oder sonstige elektromagnetische oder akustische Sensoren umfassen, die dazu eingerichtet sind, um das Umfeld des Ego-Fahrzeuges (100) zu erfassen. Die Erfassungssensorik (103) ist hierbei als die Gesamtheit an technischen Komponenten zu verstehen, welche die Umfelderkennung eines Fahrzeuges bei der Anwendung einer konventionellen ACC-Funktion realisieren.

Die Fahrzeugsensorik (141) kann gemäß einigen Ausführungsformen technische Komponenten umfassen wie einen Drehzahlsensor, einen Geschwindigkeitssensor, einen Beschleunigungssensor, einen Raddrehzahlsensor und Weitere, die dazu eingerichtet sind, um Zustandsgrößen des Ego-Fahrzeuges (100) zu erfassen.

Die Antriebssteuereinrichtung (160) und die Leistungsübertragungssteuereinrichtung (170), umfassen technische Komponenten, welche auch als "ECU" ("electronic control unit") bekannt sind, die im Wesentlichen dazu eingerichtet sind, um Signale von weiteren Komponenten des Ego-Fahrzeuges (100) zu empfangen und zu weiteren Signalen, Steuerungs- oder Regelungsgrößen oder sonstigen Zustandsinformationen zu verarbeiten.

In einer Ausführungsform empfängt die Antriebssteuereinrichtung (160) beispielsweise eine Information aus der Fahrtregelungsvorrichtung (180), umfassend einen Wert für die Sollgeschwindigkeit des Ego-Fahrzeuges (100), wobei die Antriebssteuerungseinrichtung (160) wiederum Steuerungssignale an die Antriebseinheit (120) ausgibt, um diese so zu steuern, eine entsprechende Leistung abzugeben, die zum Erreichen der gewünschten Sollgeschwindigkeit erforderlich ist. In einer weiteren Ausführungsform empfängt die Leistungsübertragungssteuereinrichtung (170) beispielsweise ebenfalls eine entsprechende Information über eine gewünschte Sollgeschwindigkeit und gibt dabei Steuerungsdaten an die Leistungsübertragung (130) ab, um diese so zu steuern, dass die von der Antriebseinheit (120) abgegebene Leistung in eine erforderliche Raddrehzahl oder ein entsprechendes Raddrehmoment gemäß der gewünschten Sollgeschwindigkeit des Fahrzeuges umgewandelt wird. Die hiermit beschriebenen Ausführungsbeispiele sind nicht als abschließend zu verstehen, vielmehr dienen sie der Darstellung der funktionstechnischen Zusammengehörigkeit der auszugsweisen dargestellten technischen Komponenten des erfindungsgemäßen Ego-Fahrzeuges (100).

Die erfindungsgemäße Fahrtregelungsvorrichtung (180) des Ego-Fahrzeuges (100) umfasst die Gesamtheit an technischen Komponenten, um eine abstandsbasierte Geschwindigkeitsregelungsfunktion (ACC) auszuführen. Hierbei werden unterschiedliche Eingangssignale aus weiteren technischen Komponenten des Ego-Fahrzeuges (100), wie beispielsweise aus der Fahrzeugsensorik (141) und der Erfassungssensorik (103), empfangen und zu Ausgangssignalen weiterverarbeitet, welche beispielsweise an die Antriebssteuereinheit (160) und die Leistungsübertragungssteuereinheit (170) übertragen werden, um die abstandsbasierte Geschwindigkeitsregelungsfunktion (ACC) auszuführen. Ein Aspekt der Geschwindigkeitsregelungsfunktion (ACC) umfasst das Regeln der Geschwindigkeit des Ego-Fahrzeuges (100) in einer Folgefahrt, in Abhängigkeit der Bewegung eines vorausfahrenden Zielfahrzeuges (101). Hierbei wird grundsätzlich zwischen der Geschwindigkeitsregelung in Folgefahrt und in Freifahrt unterschieden. Eine Folgefahrt umfasst hierbei das Regeln der Geschwindigkeit des Ego-Fahrzeuges (100) auf einen Wert der Geschwindigkeit eines erfassten, vorausfahrenden Zielfahrzeuges (101) und dabei das Einhalten eines vordefinierten Abstandes zu jenem Zielfahrzeug (101). Eine Freifahrt umfasst das Beschleunigen des Ego-Fahrzeuges (100) auf eine voreingestellte Sollgeschwindigkeit und das Halten dieser Geschwindigkeit. Einschränkungen entstehen beispielsweise in Kurvenfahrten oder anderen erkannten Situationen, in denen eine Beschleunigung gesperrt oder eine momentane Geschwindigkeit reduziert werden kann.

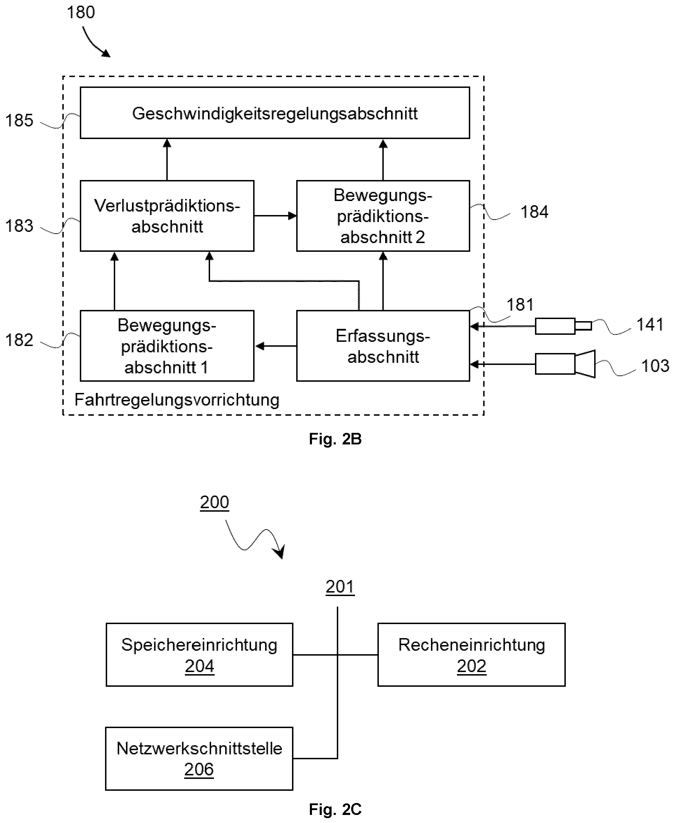

**Fig. 2B** zeigt ein Blockdiagramm, dass einen beispielhaften schematischen Aufbau der erfindungsgemäßen Fahrtregelungsvorrichtung (180) abbildet. Gemäß einem Aspekt der Erfindung umfasst die Fahrtregelungsvorrichtung (180) einen Erfassungsabschnitt (181), einen ersten Bewegungsprädiktionsabschnitt (182), einen Verlustprädiktionsabschnitt (183), einen zweiten Bewegungsprädiktionsabschnitt (184) sowie einen Geschwindigkeitsregelungsabschnitt (185). Gemäß einigen Ausführungsformen der Fahrtregelungsvorrichtung (180) können die genannten Abschnitte sowohl Software- als auch Hardwarekomponenten umfassen wie beispielsweise Sensoren oder weitere Messtechnik, die eingerichtet sind, um Messsignale zu erzeugen, aber auch Prozessoren oder weitere Rechentechnik, um entsprechende Messsignale und weitere Informationen zu verarbeiten, oder auch computerimplementierte Programme, welche innerhalb der einzelnen Abschnitte ausgeführt werden. Weiterhin können computerimplementierte Programme oder weitere softwaretechnisch implementierte Elemente der einzelnen Abschnitte Teil derselben Hardware- oder Softwarekomponenten sein.

Bezugnehmend auf **Fig. 2C** umfasst die erfindungsgemäße Fahrtregelungsvorrichtung (180) und/oder einzelne Abschnitte davon in einem Aspekt der Erfindung jeweils vollständig oder teilweise Elemente eines Computersystems (200). Ein solches Computersystem (200) kann hierbei ein oder mehrere der nachfolgend genannten Elemente umfassen, wie eine interne Kommunikationseinrichtung (201), eine Recheneinrichtung (202), eine Speichereinrichtung (204) für transiente und persistente Datenspeicherung, wie einen Ringspeicher sowie eine Netzwerkschnittstelle (206). Die interne Kommunikationseinrichtung (201) kann einen Bus oder ein Bus-System wie beispielsweise einen peripheren PCI-Architekturbus ("peripheral component interconnect") umfassen. Die interne Kommunikationseinrichtung (201) ist eingerichtet, um Daten und Informationen zwischen den jeweiligen Elementen des Computersystems (200) auszutauschen. Die Recheneinheit (202) kann einen Prozessor umfassen, der beispielsweise als eine CPU ("central processing unit") ausgebildet ist oder jegliche weitere Art von Prozessor, wie ein Mikroprozessor, ein digitaler Signalprozessor oder ein Mikrocontroller, der geeignet ist, um Berechnungen auszuführen, welche mit dem erfindungsgemäßen Verfahren zusammenhängen. Die Speichereinrichtung (204) kann einen oder mehrere Arbeitsspeicher, wie RAM ("random access memory"), Datenspeicher, wie ROM ("read only memory") und Massenspeicher umfassen. Beispielsweise können Anweisungen, wie Rechenoperationen, generelle Funktionsabläufe oder Algorithmen, welche im Computerprogramm enthalten sind in den RAM-Speicher der Speichereinrichtung (204) des Computersystems (200) geladen werden, welche ein Prozessor der Recheneinrichtung (202) ausführt. Die Speichereinrichtung (204) kann weiterhin jegliche Art von Massenspeichern umfassen, die zum Speichern aller Arten von Informationen und Daten vorgesehen sind, wie beispielsweise mehrere Festplatten, Disketten, optische Platten, Halbleiterspeicher, nichtflüchtige Speicher, EPROM, EEPROM, Flashspeicher, Magnetplatten, Wechseldatenträger oder weitere Speichermedien. Die Netzwerkschnittstelle (206) kann verschiedene Kommunikationsprotokolle, wie "Transmission Control Protocol/Internet Protocol" (TCP/IP) oder "Hyper Text Transfer Protocol" (HTTP) oder weitere umfassen, die geeignet sind, um mittels Fernzugriff und/oder über Computernetzwerke externe Kommunikationsverbindungen auf das Computersystem (200) bereitzustellen.

Gemäß einem Aspekt der Erfindung umfasst die Fahrtregelungsvorrichtung (180) einen Erfassungsabschnitt (181), der die Bewegung des vorausfahrenden Zielfahrzeuges (101) erfasst. Die Erfassung des vorausfahrenden Zielfahrzeuges (101) oder auch nachfolgend Zielobjekt (ZO) genannt, erfolgt durch konventionell bekannte, technische Peripherie, um bestehende ACC-Funktionen auszuführen. In einem Aspekt der Erfindung umfasst der Erfassungsabschnitt (181) technische Komponenten der Erfassungssensorik (103), wie eine oder mehrere der nachfolgend genannten Komponenten, wie Kameras, RADAR- oder LiDAR-Sensoren oder weitere optische oder akustische Messtechnik, die eingerichtet ist, um die Umgebung des Ego-Fahrzeuges (100) zu erfassen und der Fahrzeugsensorik (141), die eingerichtet ist, um Betriebskenngrößen des Ego-Fahrzeuges (100) zu erfassen. In einigen Ausführungsformen ist der Erfassungsabschnitt (181) eingerichtet, um die Bewegung des Ego-Fahrzeuges (100) und die Bewegung eines oder mehrerer vorausfahrender Zielfahrzeuge (101) zu erfassen und daraus ein Zielobjekt (ZO) zu identifizieren.

In einem Aspekt der Erfindung umfasst die Erfassung der Bewegung eines vorausfahrenden Zielfahrzeuges (101), die Identifikation des Zielobjektes (ZO) als solches sowie die Verfolgung von jenem, durch die Erfassungssensorik (103). Hierfür werden im Erfassungsabschnitt (181) Berechnungen vorgenommen, um das Zielobjekt zu identifizieren und die Lage des Ego-Fahrzeuges relativ zu diesem zu bestimmen. Die Lage des Ego-Fahrzeuges (100) wird im Wesentlichen durch die Position, beispielsweise innerhalb eines globalen Koordinatensystems oder nach Kartenabgleich in einem lokalen North-East-Down-Koordinatensystem (NED), sowie durch dessen Ausrichtung beschrieben. Die Lage des Ego-Fahrzeuges (100) hat einen Einfluss auf die mittels Erfassungssensorik (103) erfassbaren, möglichen Zielobjekte (ZO).

In einem Aspekt der Erfindung umfasst die Erfassung der Bewegung eines Zielfahrzeuges (101) die Ermittlung des lateralen Versatzes potenzieller Zielobjekte (ZO) gegenüber dem Ego-Fahrzeug (100). Hierfür wird mittels der Erfassungssensorik (103), insbesondere des Radars der Azimutwinkel $\Phi_{max}$ ermittelt. Während der Anwendung des Radars, überstreicht das Radar-Signal kontinuierlich einen Winkelbereich vor dem Ego-Fahrzeug (100), wobei auf der Grundlage der Intensität der reflektierten Signale der Azimutwinkel $\Phi_{max}$ und daraus, über den Abstand und geometrische Verhältnisse, der laterale Versatz der reflektierenden Zielobjekte (ZO) bestimmt wird.

In einem Aspekt der Erfindung umfasst die Fahrzeugsensorik (141) einen oder mehrerer der nachfolgend genannten Sensoren, wie einen Raddrehzahlsensor, der eingerichtet ist, um die Raddrehzahl sowie in Verbindung mit dieser und dem dynamischen Reifenradius die Geschwindigkeit des Fahrzeuges zu bestimmen, einen Lenkradwinkelsensor, um den Lenkwinkel $\delta_H$ zu ermitteln, einen Drehratensensor, um die Gierrate $\psi$ des Ego-Fahrzeuges (100) zu ermitteln sowie einen Querbeschleunigungssensor, um die Querbeschleunigung $a_{y,max}$ zu ermitteln.

In einem Aspekt der Erfindung umfasst die Erfassung der Bewegung des Ego-Fahrzeuges (100) die Ermittlung der aktuellen Kurskrümmung $\kappa$ der Fahrbahn, innerhalb welcher sich das Ego-Fahrzeug (100) bewegt. Die Kurskrümmung $\kappa$ hat einen Einfluss auf den Erfassungsbereich (104) der Erfassungssensorik (103) des Ego-Fahrzeuges (100) in Kurvenfahrten. Die Kurskrümmung $\kappa$ entspricht dem Reziproken des Kurvenradius R und wird in einem Aspekt der Erfindung nach Gleichung 1a ermittelt.

$$\kappa = \frac{1}{R}$$

$$(1a)$$

In einer alternativen Ausführungsform wird die Kurskrümmung $\kappa(\kappa_S)$ über den Lenkwinkel $\delta_H$, nach Gleichung 1b ermittelt. Hierbei entspricht die Kurskrümmung $\kappa_s$ dem Lenkwinkel $\delta_H$, geteilt durch das Produkt aus der Lenkübersetzung isc mit dem Radstand I, multipliziert mit der Addition vom Quadrat der aktuellen Geschwindigkeit $v_x$, geteilt durch das Quadrat der charakteristischen Geschwindigkeit $v_{char}$ und 1. Die charakteristische Geschwindigkeit des Ego-Fahrzeuges (100) charakterisiert hierbei das Eigenlenkverhalten bei geringen Querbeschleunigungen.

$$\kappa_S = \frac{\delta_H}{(i_{SG} * l) * (1 + \frac{v_x^2}{v_{car}^2})}$$

$$(1b)$$

In einer alternativen Ausführungsform wird die Kurskrümmung $\kappa(\kappa_\psi)$ über die Gierrate $\psi$ des Ego-Fahrzeuges (100), nach Gleichung 1c ermittelt. Hierbei entspricht die Kurskrümmung $\kappa_\psi$ dem Quotienten aus der ersten zeitlichen Ableitung der Gierrate $\psi$ und dem Quadrat der aktuellen Geschwindigkeit $v_x$.

$$\kappa_\psi = \frac{\dot{\psi}}{v_x^2}$$

$$(1c)$$

In einer alternativen Ausführungsform wird die Kurskrümmung $\kappa(\kappa_{ay})$ über die Querbeschleunigung des Ego-Fahrzeuges (100), nach Gleichung 1d ermittelt. Hierbei entspricht die Kurskrümmung $\kappa_{ay}$ dem Quotienten aus der Querbeschleunigung $a_y$ und dem Quadrat der aktuellen Geschwindigkeit $v_x$.

$$\kappa_{ay} = \frac{a_y}{v_x^2}$$

$$(1d)$$

In einer alternativen Ausführungsform wird die Kurskrümmung $\kappa(\kappa_v)$ über die Differenz der Radgeschwindigkeit der Räder der linken und der rechten Seite $\Delta v$ des Ego-Fahrzeuges (100), nach Gleichung 1e ermittelt. Hierbei entspricht die Kurskrümmung $\kappa_v$ dem Quotienten aus der Differenz der Radgeschwindigkeit der Räder der linken und der rechten Seite $\Delta v$ und dem Produkt aus der aktuellen Geschwindigkeit $v_x$ und der Spurbreite b des Ego-Fahrzeuges (100).

$$\kappa_v = \frac{\Delta v}{v_x * b}$$

$$(1e)$$

In einigen Ausführungsformen wird wenigstens eine der genannten Berechnungsmethoden zur Ermittlung der Kurskrümmung $\kappa$ angewendet, wobei die Auswahl der entsprechenden Berechnungsmethode durch einen oder mehrere der nachfolgend genannten Einflussfaktoren beeinträchtigt sein kann, wie beispielsweise Seitenwind, Straßenquerneigung, Radarradius, Messempfindlichkeit bei niedrigen Geschwindigkeiten, Messempfindlichkeit bei hohen Geschwindigkeiten oder Offsetdrift. In einer alternativen Ausführungsform werden Informationen aus einem globalen oder lokalen Koordinatensystem zur Ermittlung der Kurskrümmung verwendet, wie beispielsweise GPS-Daten des Ego-Fahrzeuges (100).

In einem weiteren Aspekt der Erfindung, umfasst die Erfassung der Bewegung des Ego-Fahrzeuges (100) durch den Erfassungsabschnitt (181) die Erfassung der charakteristischen Eigenschaften der Fahrtregelung durch die ACC-Funktion. In einer Ausführungsform wird die Fahrzeugbeschleunigung x"des Ego-Fahrzeuges (100) $\ddot{x}_{i+1}$ nach Gleichung 2a ermittelt. Hierbei entspricht die Fahrzeugbeschleunigung x"des Ego-Fahrzeuges (100) i+1, in Abhängigkeit von der Zeit t, $\ddot{x}_{i+1}(t)$ der zeitlichen Translation der Fahrzeugbeschleunigung x" des Zielfahrzeuges (101) $\ddot{x}_i$ aus der Differenz der Zeit t und einer voreingestellten Zeitlücke $\tau_{set}$.

$$\ddot{x}_{i+1}(t) = \ddot{x}_i(t - \tau_{set})$$

(2a)

In einer alternativen Ausführungsform wird die Fahrzeugbeschleunigung des Ego-Fahrzeuges (100) $\ddot{x}_{i+1}$ nach Gleichung 2b ermittelt. Hierbei entspricht die Fahrzeugbeschleunigung des Ego-Fahrzeuges (100), in Abhängigkeit von der Zeit t, $\ddot{x}_{i+1}(t)$ dem Quotienten aus der Differenz der Geschwindigkeit des Zielfahrzeuges (101) i, in Abhängigkeit der Zeit t, $\dot{x}_i(t)$ und der Geschwindigkeit des Ego-Fahrzeuges (100), in Abhängigkeit der Zeit t, $\dot{x}_{i+1}(t)$, und der Zeitspanne $\tau_v$, wobei die Zeitspanne $\tau_v$ der Zeit entspricht, innerhalb welcher die Geschwindigkeitsdifferenz $v_{rel}$, zwischen dem vorausfahrenden Zielfahrzeug (101) und dem Ego-Fahrzeug (100) ausgeglichen werden soll.

$$\ddot{x}_{i+1}(t) = \frac{\dot{x}_i(t) - \dot{x}_{i+1}(t)}{\tau_v} = \frac{v_{rel}}{\tau_v}$$

(2b)

In einer alternativen Ausführungsform wird die Fahrzeugbeschleunigung des Ego-Fahrzeuges des (100) $\ddot{x}_{i+1}$ nach Gleichung 2c ermittelt. Hierbei entspricht die Fahrzeugbeschleunigung des Ego-Fahrzeuges (100), in Abhängigkeit von der Zeit t, $\ddot{x}_{i+1}(t)$ der Differenz aus der Geschwindigkeitsdifferenz $v_{rel}$ und dem Quotienten aus der Differenz des Soll-Abstandes $d_{set}$, des Ego-Fahrzeuges (100) zum vorausfahrenden Zielfahrzeug (101), und des Ist-Abstandes d, und der Zeitkonstante zur Regelung des Abstandes $\tau_d$, geteilt durch die Zeitspanne $\tau_v$.

$$\ddot{x}_{i+1}(t) = \frac{v_{rel} - \dfrac{d_{set} - d}{\tau_d}}{\tau_v}$$

(2c)

In einem weiteren Aspekt der Erfindung, umfasst die Erfassung der Bewegung des Ego-Fahrzeuges (100) durch den Erfassungsabschnitt (181) die Erfassung der Kurvengeschwindigkeit bei Freifahrt, also ohne eine erfolgte Zielobjekterkennung (ZOE) und in Abhängigkeit der Radar-Sichtweite, nach Gleichung 3a. Hierbei entspricht die Kurven-geschwindigkeit $v_{c,p}(\tau_{pre}, \kappa, \Phi_{max})$ dem Quotienten aus dem doppelten Azimutwinkel $\Phi_{max}$ und dem Produkt aus der Kurvenkrümmung $\kappa$ und der Zeitlücke $\tau_{pre}$, wobei der Azimutwinkel $\Phi_{max}$ dem Winkel zwischen Fahrtrichtung und Zielobjekt entspricht und die Zeitlücke $\tau_{pre}$ die Zeit für eine potentielle Zielobjektannäherung berücksichtigt.

$$v_{c,p}(\tau_{pre}, \kappa, \phi_{max}) = \frac{2 * \phi_{max}}{\kappa * \tau_{pre}}$$

(3a)

Hierbei entspricht Gleichung 3b der maximalen Reichweite des Radar-Systems $d_{max,eff}$.

$$d_{max,eff} = \frac{2 * \phi_{max}}{\kappa}$$

$$(3b)$$

In einer alternativen Ausführungsform wird die Kurvengeschwindigkeit bei Freifahrt, also ohne eine erfolgte Zielobjekterkennung in Abhängigkeit der maximalen Querbeschleunigung $a_{y,max}$, nach Gleichung 3c ermittelt. Hierbei entspricht die Kurvengeschwindigkeit $v_{c,ay}(\kappa, a_{y,max})$ der Wurzel aus der Querbeschleunigung $a_{y,max}$ und der Kurskrümmung $\kappa$.

$$v_{c,ay}\left( \kappa, a_{y,max} \right) = \sqrt{\frac{a_{y,max}}{\kappa}}$$

$$(3c)$$

In einem Aspekt der Erfindung umfasst die Identifizierung des Zielobjektes (ZO) durch den Erfassungsabschnitt (181) die Zuordnung eines Fahrkorridors, innerhalb welcher die Regelung der ACC-Funktion erfolgt. In einigen Ausführungsformen umfasst der Fahrkorridor die ermittelte Kurskrümmung $\kappa$ für die Kursprädiktion des Ego-Fahrzeuges (100) und eine Korridorbreite $b_{corr}$.

In einer alternativen Ausführungsform umfasst die Zuordnung eines Fahrkorridors die Anwendung eines variablen Fahrkorridors, wobei durch die Erfassungseinrichtung (181) erkannt wird, ob neben dem Fahrkorridor des Ego-Fahrzeuges (100) ein oder mehrere Nebenfahrstreifen vorhanden sind oder nicht. Nebenfahrstreifen können beispielsweise durch stehende, aber auch entgegenkommende Fahrzeuge oder aber auch durch jene Fahrzeuge, welche sich mit einem lateralen Versatz, jedoch in die gleiche Fahrtrichtung wie das Ego-Fahrzeug (100) bewegen, identifiziert werden. Durch die Erfassung der weiteren Fahrzeuge, kann der Querversatz jener Fahrzeuge kontinuierlich statistisch ausgewertet und in Abhängigkeit davon die Korridorbreite $b_{corr}$ angepasst werden.

In einer alternativen Ausführungsform umfasst die Zuordnung eines Fahrkorridors die Anwendung einer örtlichen Hysterese, in Abhängigkeit der Zielobjekterkennung durch die Erfassungseinrichtung (181). Ist ein Zielobjekt (ZO) erkannt, so wird die Korridorbreite $b_{corr}$ erhöht. Dadurch steigt die Toleranz ein Zielobjekt (ZO) in der Erkennung zu halten, auch bei dynamischen Fahrten des Ego-Fahrzeuges (100) und des vorausfahrenden Zielfahrzeuges (101).

In einer alternativen Ausführungsform umfasst die Zuordnung eines Fahrkorridors die Anwendung einer zeitlichen Hysterese, in Abhängigkeit einer Zielplausibilität. Die Zielplausibilität beschreibt deinen Wert zwischen Null und Eins, wobei dem Wert Eins die höchste Plausibilität zugewiesen wird. Je näher ein erkanntes Zielobjekt (ZO) im Kern des Fahrkorridors oder auch in der Nähe der Mittellinie der Kurskrümmung $\kappa$ des Ego-Fahrzeuges (100) fährt, umso höher ist die Zielplausibilität, oder mit anderen Worten, umso wahrscheinlicher ist das erkannte Objekt ein Zielobjekt (ZO), auf welches die ACC-Funktion regelt. Übersteigt die Zielplausibilität einen Wert von 0,4 wird das erfasste Objekt als Zielobjekt erkannt. Fällt die Zielplausibilität unter einen Wert von 0,2 gilt das erkannte Zielobjekt nicht mehr als solches. Die Zielplausibilität trägt somit dazu bei, das Eindringen oder das Verlassen von potenziellen Zielobjekten aus dem Bereich des Fahrkorridors des Ego-Fahrzeuges (100) zu ermitteln.

In einer alternativen Ausführungsform umfasst die Zuordnung eines Fahrkorridors die Anwendung einer zeitlichen Hysterese, in Abhängigkeit der Änderung der Zielplausibilität. Die Bewertung der Änderung der Zielplausibilität trägt dazu bei, einen potenziellen Zielobjektverlust (ZOV) zu erkennen und/oder zu kategorisieren. Grundlegend kann zwischen trivialen ZOV (t-ZOV) und nicht trivialen ZOV (nt-ZOV) unterschieden werden. Ein trivialer ZOV (t-ZOV) gilt als ZOV, bei welchem das Zielobjekt (ZO) länger als 10 Sekunden nicht mehr von der Erfassungssensorik (103) erkannt wird. Ein nicht trivialer ZOV (nt-ZOV) gilt als ZOV, bei welchem das Zielobjekt (ZO) innerhalb von 10 Sekunden nach einem Erfassungsverlust, wiedererkannt wird. Unterschiedliche Fahrsituationen oder Fahrmanöver der vorausfahrenden Zielfahrzeuge (101) können mittels der Änderung der Zielplausibilität erkannt werden. Beispielsweise wird die Zielplausibilität bei einem einfachen Spurwechsel des vorausfahrenden Zielfahrzeuges (101) eher langsam sinken, die Änderung ist also gering. Bei einem Abbiegevorgang oder einem ZOV aufgrund einer Kurvenfahrt wird die Zielplausibilität beispielsweise schneller als bei einem Spurwechsel sinken, die Änderung ist dementsprechend höher.

In einer alternativen Ausführungsform umfasst die Zuordnung eines Fahrkorridors die Anwendung eines geschwindigkeitsabhängigen maximalen Abstandes für Zielobjekte (ZO). Auf diese Art und Weise werden Objekte mit entsprechend größerer Entfernung zum Ego-Fahrzeug (100) als andere, eher nicht als Zielobjekt (ZO) berücksichtigt.

In einer alternativen Ausführungsform umfasst die Zuordnung eines Fahrkorridors eine oder mehrere der nachfolgend genannten Anwendungen, wie einen variablen Fahrkorridor, eine örtliche Hysterese, eine Zielplausibilität, eine Änderung der Zielplausibilität und einen maximalen Abstand. Werden mehrere potenzielle Zielobjekte erkannt, so umfasst die Zuordnung des Fahrkorridors eine oder mehrere der nachfolgend genannten Bewertungskriterien, wie die Auswertung des geringsten Längsabstandes zum Ego-Fahrzeug (100), des geringsten Abstandes zur Kursmitte oder auch der Kurskrümmung κ des Ego-Fahrzeuges (100) oder der geringsten erforderlichen Sollbeschleunigung des Ego-Fahrzeuges (100).

Zusammengefasst, umfasst der Erfassungsabschnitt (181) somit technische Komponenten einer Erfassungssensorik (103) und einer Fahrzeugsensorik (141), wobei die Erfassungssensorik (103) eine oder mehrere Komponenten, wie eine Kamera, einen RADAR- oder einen LiDAR-Sensor umfasst und wobei die Fahrzeugsensorik (141) eine oder mehrere der Komponenten wie einen Raddrehzahlsensor, einen Lenkradwinkelsensor, einen Drehratensensor und einen Querbeschleunigungssensor umfasst.

Hierbei ist der Erfassungsabschnitt (181) erfindungsgemäß dadurch gekennzeichnet, dass die Erfassung der Bewegung des Ego-Fahrzeuges (100) die Ermittlung der aktuellen Kurskrümmung κ, der Fahrzeugbeschleunigung x" und der Kurvengeschwindigkeit $v_{c,p}$ umfasst, sowie, dass die Identifikation eines Zielobjektes (ZO) die Zuordnung eines Fahrkorridors zum Ego-Fahrzeug (100), in Abhängigkeit einer oder mehrerer Berechnungsgrößen umfasst, wie einer Korridorbreite $b_{corr}$, einer örtlichen Hysterese der Korridorbreite $b_{corr}$, einer Zielplausibilität, einer Änderung der Zielplausibilität, eines geschwindigkeitsabhängigen Abstandes, eines Abstandes zur Kursmitte des Ego-Fahrzeuges (100) und einer Sollbeschleunigung des Ego-Fahrzeuges (100).

Insbesondere ist der Erfassungsabschnitt (181) hierbei erfindungsgemäß dadurch gekennzeichnet, dass die Erfassung der Bewegung des Ego-Fahrzeuges (100) die Ermittlung der aktuellen Kurskrümmung κ, der Fahrzeugbeschleunigung x" und der Kurvengeschwindigkeit $v_{c,p}$ umfasst, wobei die aktuelle Kurskrümmung κ in Abhängigkeit einer oder mehrerer der mittels Erfassungssensorik (103) ermittelten physikalischen Eingangsgrößen, wie des Lenkwinkels $\delta_H$, der Gierrate ψ, der Querbeschleunigung $a_y$ und der Radgeschwindigkeit ermittelt wird, wobei die Fahrzeugbeschleunigung x" in Abhängigkeit einer oder mehrerer Steuerungssignale wie, einer voreingestellten Zeitlücke $\tau_{set}$, einer Geschwindigkeitsdifferenz $v_{rel}$, zwischen Ego-Fahrzeug (100) und vorausfahrendem Zielfahrzeug (101) und eines Soll- und Ist-Abstandes $d_{set}$ bzw. d zwischen Ego-Fahrzeug (100) und vorausfahrendem Zielfahrzeug (101) ermittelt wird, wobei die Kurvengeschwindigkeit $v_{c,p}$ in Abhängigkeit einer voreingestellten Zeitlücke $\tau_{pre}$, der aktuellen Kurskrümmung κ und des ermittelten Azimutwinkels $\Phi_{max}$ ermittelt wird, sowie, dass die Erfassung der Bewegung eines Zielfahrzeuges (101) die Bestimmung des Abstandes des Ego-Fahrzeuges (100) zum Zielfahrzeug (101), in Abhängigkeit des mittels Radarsensor ermittelten Azimutwinkels $\Phi_{max}$ umfasst, sowie, dass die Identifikation eines Zielobjektes (ZO) die Zuordnung eines Fahrkorridors zum Ego-Fahrzeug (100), in Abhängigkeit einer oder mehrerer Berechnungsgrößen, wie einer Korridorbreite $b_{corr}$, einer örtlichen Hysterese der Korridorbreite $b_{corr}$, einer Zielplausibilität, einer Änderung der Zielplausibilität, eines geschwindigkeitsabhängigen Abstandes, eines Abstandes zur Kursmitte des Ego-Fahrzeuges (100) und einer Sollbeschleunigung des Ego-Fahrzeuges (100) ermittelt wird.

Gemäß einem weiteren Aspekt der Erfindung umfasst die erfindungsgemäße Fahrtregelungsvorrichtung (180) einen ersten Bewegungsprädiktionsabschnitt (182), der aus der erfassten Bewegung des Ego-Fahrzeuges (100) und in Abhängigkeit der Geschwindigkeitsregelungsfunktion (ACC) eine virtuelle Trajektorie des Ego-Fahrzeuges (100) für einen in der Zukunft liegenden Zeitpunkt ermittelt.

In einem Aspekt der Erfindung umfasst die Ermittlung der virtuellen Trajektorie des Ego-Fahrzeuges (100) das Ermitteln von dessen Bewegung, in der Ausgestaltung einer prädizierten Kurskrümmung $\kappa_{pred}$, für einen in der Zukunft liegenden Zeitpunkt. In einigen Ausführungsformen umfasst das Ermitteln der prädizierten Kurskrümmung $\kappa_{pred}$ die Annahme, dass die Bahnkurve, welche durch den Erfassungsabschnitt (181) als Momentaufnahme der Kurskrümmung κ ermittelt wurde, beibehalten wird, wobei die aktuelle Kurskrümmung κ als die prädizierte Kurskrümmung $\kappa_{pred}$, für einen in der Zukunft liegenden Zeitpunkt festgelegt wird. In einer alternativen Ausführungsform umfasst das Ermitteln der prädizierten Kurskrümmung $\kappa_{pred}$ die Auswertung der mittels Erfassungsabschnitt (181) erfassten Bewegung von wenigstens einem Zielobjekt (ZO) und die Ableitung der prädizierten Kurskrümmung $\kappa_{pred}$ durch Erfassung der Kurskrümmung $\kappa_{ZO}$ des Zielobjektes (ZO) und des zeitlichen Verlaufes von dieser. Unter Berücksichtigung eines definierbaren zeitlichen Versatzes $\tau_{ZO}$, aufgrund der Bewegung des Zielobjektes (ZO) und des Ego-Fahrzeuges (100), innerhalb des erfassten zeitlichen Verlaufes der Kurskrümmung $\kappa_{ZO}$ des Zielobjektes (ZO), wird die prädizierte Kurskrümmung $\kappa_{pred}$ festgelegt als die Kurskrümmung $\kappa_{ZO}(t+/-\tau_{ZO})$ des Zielobjektes (ZO), zum Zeitpunkt des Versatzes. In einer alternativen Ausführungsform ist die prädizierte Kurskrümmung $\kappa_{pred}$ aus den aktuellen GPS-Daten des Ego-Fahrzeuges (100) ableitbar.

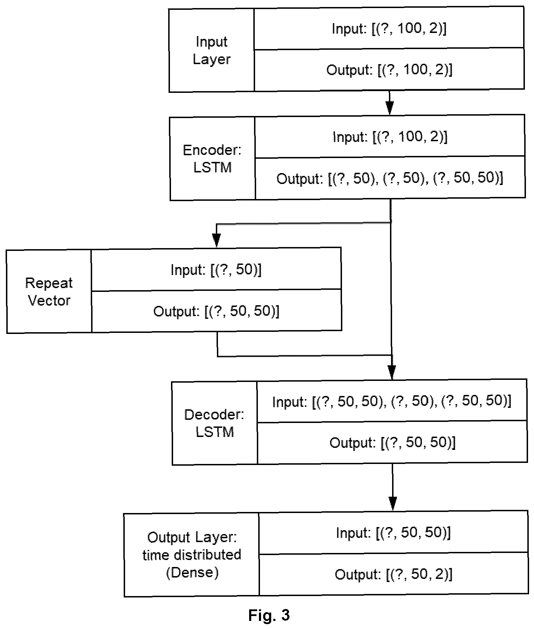

In einer vorteilhaften Ausführungsform umfasst das Ermitteln der prädizierten Kurskrümmung $\kappa_{pred}$ die Vorhersage des Streckenverlaufes des Ego-Fahrzeuges (100) für einen in der Zukunft liegenden Zeitpunkt. **Fig. 3** zeigt den Aufbau eines erfindungsgemäßen Encoder-Decoder-LSTM-Modells zur Vorhersage des Streckenverlaufes. In einem Aspekt der Erfindung, ist das Encoder-Decoder-LSTM-Modell eingerichtet, um mittels Erfassungssensorik (103) oder Positionsdaten globaler oder lokaler Koordinatensysteme, wie beispielsweise GPS-Daten, erfasste, zweidimensionale x- und y-Koordinaten des vorangegangenen Streckenverlaufs der letzten 100 Meter Fahrt als Eingangsgrößen zu erhalten und daraus 50 Meter Streckenverlauf des Ego-Fahrzeuges (100) vorherzubestimmen. Hierzu umfasst die Eingabeschicht (Input Layer) vorgefilterte x- und y-Koordinaten als Positionsdaten, der vorangegangenen 100 Meter, wobei die Größe jeder Probe (100, 2) ist.

Das Encoder-Netzwerk empfängt die Daten der Eingabeschicht und bildet einen Vektor, welcher die interne Darstellung der Eingabesequenz beschreibt, wobei die Länge des Vektors der Anzahl der Einheiten in dieser Schicht entspricht. Das Encoder-Netzwerk umfasst hierbei eine LSTM-Zelle ("Long Short Term Memory") mit 50 Einheiten. Das Decoder-Netzwerk umfasst ebenfalls eine LSTM-Zelle mit 50 Einheiten und transformiert die gelernte, interne Darstellung der Eingangssequenz aus dem Encoder-Netzwerk in eine Ausgangssequenz. Die Ausgangssequenz umfasst hierbei die x- und y-Koordinaten des vorherzusagenden 50 Meter Streckenverlaufes. Weil das Encoder-Netzwerk eine [2x100] Matrix als Ausgabe (Output) erzeugt, deren Länge durch die Anzahl der Speicherzellen der LSTM-Schicht vorgegeben ist und das Decoder-Netzwerk eine LSTM-Schicht umfasst, die eine dreidimensionale Eingabe erwartet, umfassend Proben, Zeitschritte und Merkmale, um daraus eine decodierte Sequenz zu erhalten, umfasst das Encoder-Decoder-LSTM-Modell zusätzlich einen Repeat-Vector als Zwischenschicht. Der Repeat-Vector ist hierbei eingerichtet, um den aus dem Encoder-Netzwerk erhaltenen Vektor zu wiederholen, um die Dimension der Ausgaben für die Eingaben des Decoder-Netzwerkes zu erhöhen. Die Ausgabeschicht umfasst eine dichte Schicht (Dense) als TimeDistributed-Wrapper. Jede einzelne Schicht wird mit der Tangenshyperbolicus-Funktion aktiviert.

In einem Aspekt der Erfindung umfasst die Herstellung des erfindungsgemäßen Encoder-Decoder-LSTM-Modells ein Training mit einer Anzahl von 700 bis 1500 Epochen, eine Lernrate von 0,0005, einen Gradientenabstiegsalgorithmus ("Adam-Optimizer") als Optimierer sowie die mittlere quadratische Abweichung als Verlustfunktion. Das Training umfasst weiterhin das Kodieren der Eingangsdaten in zwei Zustände durch das Encoder-Netzwerk, das Wiederholen des ersten Zustandes für die Anzahl an Zeitschritten, welche vorhergesagt werden sollen durch den Repeat-Vector, das Dekodieren der somit ermittelten Anfangszustände durch das Decoder-Netzwerk sowie die Anwendung einer dichten Schicht darauf, zur Bestimmung der Anzahl, der für jeden Zeitschritt benötigten Merkmale.

In einem Aspekt der Erfindung umfasst das Training des Encoder-Decoder-LSTM-Modells die Vorbereitung der Trainingsdaten. In einigen Ausführungsformen werden hierfür GPS-Positionen als Messdaten erfasst, aus welchen anschließend Längen- und Breitengradinformationen extrahiert werden, um x- und y-Koordinaten als zweidimensionale NED-Positionsdaten zu erhalten. Die nach solcher Art und Weise extrahierten GPS-Positionsdaten werden in der Art geprüft, ob Breitengradinformationen e [-90° 90°] und Längengradinformationen e [-180° 180°] entsprechen. Die extrahierten Positionsdaten werden mit einer Abtastrate von 1 Hz in Zeitreihendaten umgewandelt, welche anschließend als Funktionen der zurückgelegten Strecke umgerechnet werden. Dadurch erfolgt die Darstellung der Positionsdaten als GPS-Koordinaten und schließlich NED-Koordinaten in Abhängigkeit der zurückgelegten Fahrstrecke. Die zurückgelegte Strecke entspricht hierbei der aufsummierten Entfernungen zwischen den einzelnen Positionsdaten. Optional werden die Positions- und Streckendaten interpoliert und erneut abgetastet, damit sämtliche Datenpunkte mit einem Abstand von einem Meter vereinheitlicht vorliegen (Homogenisierung der Abtastung). Weiterhinwerden im Abstand von 3000 Metern Streckenlänge Ursprungspunkte gesetzt, um größere Abweichungen der zweidimensionalen Beschreibung gegenüber der tatsächlichen Position zu vermeiden. Der erste Ursprungspunkt ist hierbei innerhalb des Ellipsoid Modells WGS 84 willkürlich auf einen Referenzpunkt auf der Erdoberfläche festgelegt. Die Umrechnung von geodätischen Koordinaten in NED-Koordinaten zielt hierbei darauf ab, eine Projektion von GPS-basierten Positionsdaten auf eine feste Tangentialebene zu bewerkstelligen. Die Vorbereitung der Trainingsdaten für das Training des Encoder-Decoder-LSTM-Modells umfasst die Anwendung eines Sliding-Window-Algorithmus, um die Gesamtheit der Trainingsdaten in Sequenzen von 150 Metern Länge aufzuteilen. Innerhalb einer 150 Meter langen Sequenz wird dann ein Fenster für eine feste Anzahl an Zeitschritten festgelegt, wobei eine Anzahl n=100 (Meter) an Datenpunkten als Eingangsgrößen für das Training gelten, um die Anzahl m=50 (Meter) an Datenpunkten vorherzubestimmen, wobei eine Summe aus den Anzahlen n und m die Länge des Fensters ("Window") definiert. Zusätzlich wird ein Versatz definiert, wobei das Fenster sich für jede Iteration des Trainings, innerhalb der Trainigssequenz von 3000 mLänge um den Versatz auf den Zeitreihendaten verschiebt ("Sliding"), sodass stetig neue Eingangs- und neue Ausgangsgrößen trainiert werden.

In einer alternativen Ausführungsform der Vorhersage des Streckenverlaufes ist das Encoder-Decoder-LSTM-Modell eingerichtet, um mittels Erfassungssensorik (103) oder Positionsdaten globaler oder lokaler Koordinatensysteme, wie beispielsweise GPS- oder NED-Daten, erfasste, zweidimensionale x- und y-Koordinaten des vorangegangenen Streckenverlaufs der letzten 100 Meter Fahrt als Eingangsgrößen zu erhalten und daraus 50 Meter Streckenverlauf des Ego-Fahrzeuges (100) vorherzubestimmen, wobei die letzten 100 Meter Streckenverlauf aus den letzten 50 Metern des real gefahrenen Streckenverlaufes und den vorhergesagten 50 Metern der vorangegangenen Streckenverlaufsprädiktion gebildet werden.

Aus der Kenntnis des zukünftigen Streckenverlaufes ist somit in vorteilhafter Art und Weise ebenso die zukünftige Bewegungsrichtung des Ego-Fahrzeuges (100) bekannt, sodass aus dieser und Informationen aus Betriebskenngrößen der Antriebseinheit (120) und der Leistungsübertragung (130), wie der Fahrzeuggeschwindigkeit und Beschleunigung, die prädizierte Kurskrümmung $\kappa_{pred}$, über geometrische Verhältnisse und unabhängig von externen Signalen, wie beispielsweise GPS-Daten, vorherbestimmt werden kann.

Somit ist der erfindungsgemäße, erste Bewegungsprädiktionsabschnitt (182) in einer Ausführungsform dadurch gekennzeichnet, dass dieser eine prädizierte Kurskrümmung $\kappa_{pred}$ für einen in der Zukunft liegenden Zeitpunkt als die virtuelle Trajektorie (108) des Ego-Fahrzeuges (100) ermittelt, wobei die prädizierte Kurskrümmung $\kappa_{pred}$ aus der

Vorhersage des Streckenverlaufes des Ego-Fahrzeuges (100) abgeleitet wird. Hierbei umfasst der erste Bewegungsprädiktionsabschnitt (182) ein Encoder-Decoder-LSTM-Netzwerk, mit einer Eingabeschicht für Stichproben der Dimension (100, 2), einer Encoder-Schicht, umfassend eine LSTM-Zelle mit 50 Einheiten, einen RepeatVector, umfassend eine Länge von 50 Einheiten, eine Decoder-Schicht, umfassend 50 Einheiten sowie eine Ausgabeschicht, umfassend eine dichte Schicht mit 50 Einheiten, wobei jede Schicht mit der Tangenshyperbolicus-Funktion aktiviert wird und, das eingerichtet ist, um mittels Erfassungssensorik (103) oder Positionsdaten globaler oder lokaler Koordinatensysteme erfasste, zweidimensionale x- und y-Koordinaten des vorangegangenen Streckenverlaufs der letzten 100 Meter Fahrt als Eingangsgrößen zu erhalten und daraus 50 Meter des zukünftigen Streckenverlaufes des Ego-Fahrzeuges (100) vorherzubestimmen.

Gemäß einem weiteren Aspekt umfasst die erfindungsgemäße Fahrtregelungsvorrichtung (180) einen Verlustprädiktionsabschnitt (183), der ein Zielobjektverlust (ZOV) des vorausfahrenden Zielfahrzeuges (101), in Abhängigkeit von dessen erfasster Bewegung und der virtuellen Trajektorie des Ego-Fahrzeuges (100), wobei die virtuelle Trajektorie den Bewegungszustand des Ego-Fahrzeuges (100) charakterisiert, für einen in der Zukunft liegenden Zeitpunkt vorherbestimmt und jenen Zielobjektverlust (ZOV) in einen trivialen Zielobjektverlust (t-ZOV) oder einen nicht-trivialen Zielobjektverlust (nt-ZOV) kategorisiert.

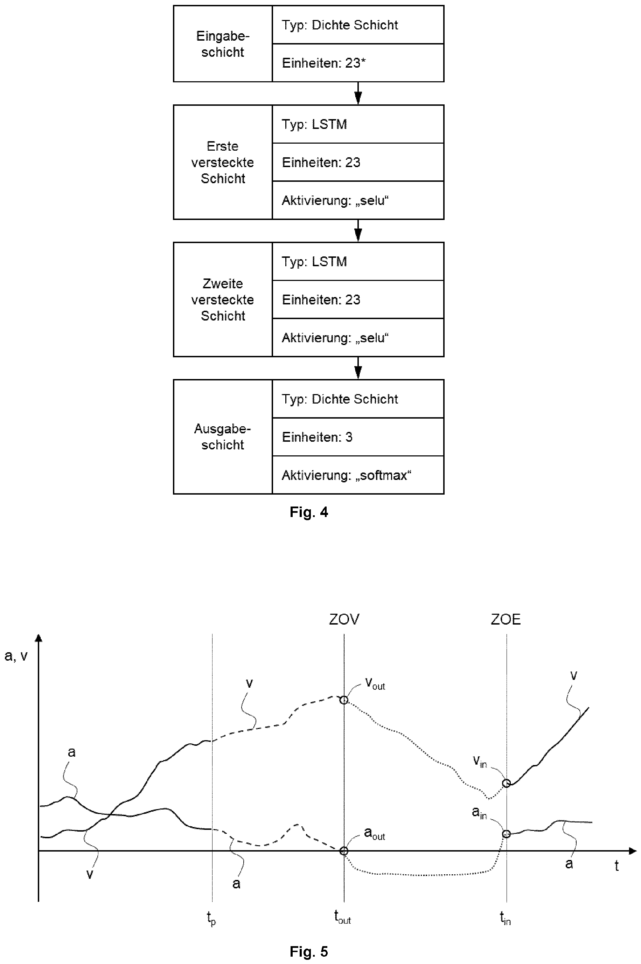

Gemäß einem Aspekt der Erfindung umfasst der Verlustprädiktionsabschnitt (183) ein rekurrentes neuronales Netz mit LSTM-Zellen (RNN-LSTM), das einen Zielobjektverlust (ZOV) vorherbestimmt und jenen in einen trivialen Zielobjektverlust (t-ZOV) oder einen nicht-trivialen Zielobjektverlust (nt-ZOV) kategorisiert. **Fig. 4** zeigt den exemplarischen Aufbau des RNN-LSTM-Modells zur Erkennung und Kategorisierung von Zielobjektverlusten (ZOV). Das erfindungsgemäße RNN-LSTM-Modell umfasst ein rekurrentes neuronales Netz mit vier Schichten, umfassend eine Eingabeschicht, zwei versteckte Schichten und eine Ausgabeschicht. Die Eingabeschicht ist eine dichte Schicht, umfassend eine Anzahl an Einheiten, die einer festgelegten Anzahl an Eingangsgrößen entspricht. Die Eingangsgrößen entsprechen Signalen, welche innerhalb des Fahrzeugsystems des Ego-Fahrzeuges (100) erzeugt und verarbeitet werden. Diese können beispielsweise über Bussysteme des Fahrzeugsystems erhalten werden, wie beispielsweise den CAN-Bus oder Flexray oder weitere Bus-Architekturen. Tabelle **T1** zeigt hierzu eine Auswahl an möglichen (Bus-) Signalen, welche als Eingangsgrößen des erfindungsgemäßen RNN-LSTM-Modells verwendet werden können.

(T1)

| Nr. | Bezeichnung | Beschreibung |
|---|---|---|
| S01 | ACC-Sollbeschleunigung | Durch ACC-Funktion angeforderter Sollwert der Beschleunigung des Ego-Fahrzeuges (100) |
| S02 | ACC-Zielobjekt | Durch ACC-Funktion erkanntes Zielobjekt (ZO) |
| S03 | Relativgeschwindigkeit | Durch Sensordatenfusion aus Bildverarbeitung und Radar ermittelte Relativgeschwindigkeit zwischen Zielobjekt (ZO) und Ego-Fahrzeug (100) |
| S04 | Abstand Zielfahrzeug | Durch Sensordatenfusion aus Bildverarbeitung und Radar ermittelter longitudinaler Abstand zwischen Zielobjekt (ZO) und Ego-Fahrzeug (100) |
| S05 | Geschwindigkeit Ego | ESP-Signal für die absolute Geschwindigkeit des Ego-Fahrzeuges (100) |
| S06 | Beschleunigung Ego | Absolute Längsbeschleunigung des Ego-Fahrzeuges (100) |
| S07 | Beschleunigung Getriebe | vom Triebstrang im Getriebe umgesetzte longitudinale Beschleunigung des Ego-Fahrzeuges (100) |
| S08 | Soll-Antriebsmoment | Sollwert für das Antriebsmoment des Motors / der Antriebseinheit (120) des Ego-Fahrzeuges (100) |
| S09 | Ist-Raddrehmoment | Durch die Leistungsübertragung (130) auf die Räder übertragenes Drehmoment des Ego-Fahrzeuges (100) |
| S10 | Messzeitpunkt Sensorik | Aktueller Zeitstempel der Sensordatenfusion |
| S11 | Antriebsmomentbegrenzung | dynamische Begrenzung des Antriebsmoments des Motors/ der Antriebseinheit (120) des Ego-Fahrzeuges (100) |
| S21 | Anzahl Erkennungszyklen | Anzahl der Flexray-Zyklen seit der Initialisierung oder Verfolgung des Zielobjekts |

(fortgesetzt)

| Nr. | Bezeichnung | Beschreibung |
|-----|-------------|--------------|
| S12 | Beschleunigungsrate Ego | Änderung der Beschleunigung des Ego-Fahrzeuges |
| S16 | Ist-Antriebsmoment | Istwert für Drehmoment der Antriebseinheit (120) des Ego-Fahrzeuges (100) |
| S19 | Längenabstand Seitenobjekte | Longitudinaler Abstand des Ego-Fahrzeuges (100) zu Objekten des Fahrzeugumfeldes |
| S23 | Orientierung Egofahrzeug | Bewegungsrichtung, Neigungs- und Gierwinkel des Ego-Fahrzeuges (100) |
| S20 | Position Seitenobjekte | Position von Objekten des Fahrzeugumfeldes |
| S14 | Position Seitenobjekte, linke Seitenspur | Position von Objekten in der linken benachbarten Fahrspur des Ego-Fahrzeuges (100) |
| S13 | Position Seitenobjekte, rechte Seitenspur | Position von Objekten in der rechten benachbarten Fahrspur des Ego-Fahrzeuges (100) |
| S18 | Radialabstand Seitenobjekte | Radialer Abstand des Ego-Fahrzeuges (100) zu Objekten des Fahrzeugumfeldes |
| S15 | Soll-Antriebsmoment gefiltert | Gefilterter Sollwert für das Antriebsmoment des Motors / der Antriebseinheit (120) des Ego-Fahrzeuges (100) |
| S17 | Soll-Kupplungsmoment | Sollwert für Drehmoment der Leistungsübertragung (130) des Ego-Fahrzeuges (100), dass die Antriebseinheit (120) aufbringen muss |
| S22 | Winkel Seitenobjekte | Radialer Winkelabstand des Ego-Fahrzeuges (100) zu Objekten des Fahrzeugumfeldes |
| S23 | Referenzgeschwindigkeit | Referenzgeschwindigkeit des Ego-Fahrzeuges (100) |

In einigen Ausführungsformen werden sämtliche der 23 in Tabelle T1 aufgelisteten Signale (S01 - S23) als Eingangsgrößen verwendet, wobei die Eingabeschicht und die verstreckten Schichten des RNN-LSTM-Modells eine Anzahl von 23 Einheiten umfassen.

In einer vorzugsweisen Ausführungsform werden die ersten 11 der in Tabelle T1 aufgelisteten Signale (S01 - S11) als Eingangsgrößen verwendet, umfassend die Signale des Ego-Fahrzeuges (100) wie die ACC-Sollbeschleunigung (S01), die ACC-Zielobjekterkennung (S02), die Relativgeschwindigkeit zwischen Ego-Fahrzeug (100) und Zielobjekt (ZO) (S03), der Abstand zum Zielfahrzeug (S04), die Geschwindigkeit des Ego-Fahrzeuges (100) (S05), die Beschleunigung des Ego-Fahrzeuges (100) (S06), die Beschleunigung des Ego-Fahrzeuges (100), welche durch die Leistungsübertragung (130) umgesetzt wird (S07), das Soll-Antriebsmoment der Antriebseinheit (120) (S08), das Ist-Raddrehmoment (S09), den Zeitstempel für die Erfassungssensorik (103) (S10) sowie die Antriebsmomentbegrenzung (S11).

In einer insbesondere vorzugsweisen Ausführungsform werden die ersten 6 der in Tabelle T1 aufgelisteten Signale (S01 - S06) als Eingangsgrößen verwendet, umfassend die Signale des Egofahrzeuges (100) wie die ACC-Sollbeschleunigung (S01), die ACC-Zielobjekterkennung (S02), die Relativgeschwindigkeit zwischen Ego-Fahrzeug (100) und Zielobjekt (ZO) (S03), der Abstand zum Zielfahrzeug (S04), die Geschwindigkeit des Ego-Fahrzeuges (100) (S05) sowie die Beschleunigung des Ego-Fahrzeuges (100) (S06).

Die Auswahl der 23 in Tabelle T1 aufgelisteten Bus-Signale als Eingangsgrößen für das erfindungsgemäße RNN-LSTM-Modell wird hierbei während der Herstellung des Verlustprädiktionsabschnittes (183) der erfindungsgemäßen Fahrtregelungsvorrichtung (180) getroffen. In einem Aspekt der Erfindung umfasst die Herstellung der Fahrtregelungsvorrichtung (180) die Vorauswahl von 6 grundlegenden Signalen, welche physikalischen Eingangsgrößen des RNN-LSTM-Modells entsprechen. Diese 6 grundlegende Signale ergeben sich aus Informationen der ACC-Funktion, welche den aktuellen Regelungseingriff in die Bewegung des Ego-Fahrzeuges (100) beschreiben, Sensordaten der Erfassungssensorik (103), welche Informationen über die Bewegung des Zielobjektes (ZO) liefern sowie fahrzeuginterne Informationen über die aktuelle Bewegung des Ego-Fahrzeuges (100) selbst. In einer Ausführungsform umfassen die ACC-Sollbeschleunigung (S01) und die ACC-Zielobjekterkennung (S02) vorausgewählte Signale, bezogen auf die ACC-Informationen, die Relativgeschwindigkeit (S03) und der Abstand zum Zielfahrzeug (S04) vorausgewählte Signale, bezogen auf die Bewegung des Zielobjektes (ZO) und die Geschwindigkeit (S05) sowie die Beschleunigung (S06) des Ego-Fahrzeuges (100) vorausgewählte Signale, bezogen auf die Bewegung jenes Ego-Fahrzeuges (100). Hierbei gibt die ACC-Sollbeschleunigung (S01) den aktuell in er ACC-Funktion hinterlegten Sollwert für den Regeleingriff auf die Beschleunigung des Ego-Fahrzeuges (100) an, wobei dieser stellvertretend für den gesamten Regeleingriff der ACC-Funktion in die Fahrzeugsteuerung zu werten ist. Die ACC-Zielobjekterkennung (S02) gibt hingegen einen Wert an, der repräsentativ für den Zustand der Zielobjekterkennung (ZOE) steht und somit auf das Regelungsverhalten der ACC-Funktion, bezogen auf eine Freifahrt oder eine Folgefahrt, Rückschlüsse gibt. Die Relativgeschwindigkeit (S03) zwischen Ego-Fahrzeug (100) und Zielobjekt (ZO) sowie der Abstand zum Zielfahrzeug (S04) geben grundlegende Informationen zur relativen Bewegung von Ego-Fahrzeug (100) und Zielobjekt (ZO) zueinander aus. Die Geschwindigkeit (S05) und die Beschleunigung (S06) des Ego-Fahrzeuges (100) geben wiederum Rückschlüsse auf die Bewegung des Ego-Fahrzeuges (100) in unmittelbarer Zukunft aus. Sämtliche der 6 grundlegenden Signale sind erforderlich, um die Verfolgung des Zielobjekts (ZO) und die Feststellung von dessen Verlust festzustellen oder auch vorherzubestimmen.

In einer vorzugsweisen Ausführungsform werden die 17 verbleibenden Signale aus Tabelle T1 während der Herstellung der Fahrtregelungsvorrichtung (180) mittels Analyse der Korrelation von sämtlichen im Fahrzeugsystem vorhandenen Signalen zu den 6 vorausgewählten Signalen ausgewählt. In einigen Ausführungsformen werden hierbei sämtliche im Fahrzeugsystem verfügbaren Bus- und Flexray-Signale mittels Regressionsverfahren ausgewertet. In einer Ausführungsform umfasst das Regressionsverfahren ein Regressionsmodell, welches auf dem Random-Forest-Ansatz basiert. In einer alternativen Ausführungsform umfasst das Regressionsverfahren ein Modell, welches auf dem Ansatz der Feature-Importance-Selection basiert, welches eine besondere Unterform des Random-Forest-Ansatzes darstellt. In einigen alternativen Ausführungsformen umfasst das Regressionsverfahren jedes weitere bekannte Verfahren, um aus einer Vielzahl an Signalverläufen, jene auszuwählen, welche auf weitere vorausgewählte Signalverläufe korrelieren. In einer Ausführungsform ergeben sich die in Tabelle T1 aufgelisteten Signale aus einem Feature-Importance Ranking (FIR) aus Operational Design Domain (ODD) spezifischen, trainierten Random Forrests heraus, wobei die ODDs sein können: Stadtfahrt, Landstraßenfahrt, Autobahnfahrt. Das FIR erstellt dabei aus $\sim 10^5$ Bussignalen ein gelistetes Ranking von Signalen, geordnet nach abfallender Korrelation zu den 6 definierenden, vorausgewählten Signalen. Für jede ODD werden mithilfe des FIR drei Listen mit je 100 Signalen für Sequenzen mit 30 s, 60 s, und 90 s Länge erstellt, also insgesamt 9 Listen. Um eine robuste, ODD- und sequenzunabhängige Signalauswahl zu treffen, wird anschließend der Schnitt aller 9 Listen ermittelt. Das Ergebnis sind die in Tabelle T1 angegebenen 17 verbleibenden Signale.

In einem Aspekt der Erfindung umfasst die Herstellung der Fahrtregelungsvorrichtung (180) die Herstellung von Trainingsdaten zur Herstellung des RNN-LSTM-Modells des Verlustprädiktionsabschnitts (183). In einigen Ausführungsformen umfasst die Herstellung von Trainingsdaten zur Herstellung des RNN-LSTM-Modells des Verlustprädiktionsabschnitts (183) die Sammlung von Messdaten, die Extraktion von relevanten Signalen aus den Messdaten, die Vorverarbeitung der Trainingsdaten und die Implementierung eines Sliding-Window-Algorithmus auf die vorverarbeiteten Trainingsdaten.

In einem Aspekt der Erfindung umfasst die Sammlung von Messdaten das Aufnehmen von kontinuierlichen Zeitreihendaten, welche insbesondere der Erfassungssensorik (103) und der Fahrzeugsensorik (141) entstammen. Innerhalb der Zeitreihendaten werden die Zeitstempel für das Ego-Fahrzeug (100) markiert, wenn eine Zielobjekterkennung (ZOE) und ein Zielobjektverlust (ZOV) erfolgt, beispielsweise durch Auswertung des Signals der Zielfahrzeugerkennung der ACC-Funktion (S02). Die nach solcherart erzeugten, markierten Zeitreihendaten werden anschließend in kleinere Sequenzen aufgeteilt, welche jeweils ein oder mehrere Zielobjektverluste (ZOV) beinhalten. Die aufgeteilten Sequenzen umfassen unterschiedliche Datentypen von unterschiedlichen Quellen, wie Sensor-Daten-Fusion (SDF), Radar, Bildverarbeitung, weitere Sensoren, aber auch fahrzeugsysteminterne Signaldaten, wobei in bekannten Fahrzeugsystemen typischerweise mehrere zehntausend Messsignale entstehen können. Die Abtastrate für die meistens Messsignale ist typischerweise 40 ms (Millisekunden). Messsignale, deren Abtastrate abweichend davon ausgestaltet ist, können beispielsweise im Rahmen einer Datenverarbeitung auf 40 ms angepasst werden. Innerhalb der Sequenzen werden nunmehr kleinere Ausschnitte festgelegt, welche einzelne Vorgänge von Zielobjektverlusten (ZOV) und/oder Zielobjekterkennungen (ZOE) umfassen. Hierzu werden Ausschnitte mit einer Länge von 32 einzelnen Zeitschritten a 40 ms in einer Gesamtlänge von 1,24 Sekunden aus den Sequenzen erzeugt. Die einzelnen Ausschnitte werden weiterhin bezogen auf die Kategorisierung in triviale Zielobjektverluste (t-ZOV) und nicht-triviale Zielobjektverluste (nt-ZOV) kategorisiert. Zur Kategorisierung als nicht-trivialer Zielobjektverlust (nt-ZOV) werden Bedingungen überprüft, wie die Totzeit ($\Delta t \leq 10s$) bis zu einer erneuten Zielobjekterkennung (ZOE), ausschließlich vierrädrige Zielobjekte (ZO) und sowohl das Ego-Fahrzeug (100) als auch das vorausfahrende Zielfahrzeug (101) als Zielobjekt (ZO) dürfen nicht blinken.

In einem Aspekt der Erfindung umfasst die Extraktion relevanter Signale die bereits beschriebene Feature-Importance-Analyse mittels eines auf dem Random-Forest-Ansatz basierendem Regressionsmodell, um die Korrelation der Gesamtheit an, innerhalb der aufgenommenen Messdaten, verfügbaren Signale zu grundlegenden, vorausgewählten Signalen.

In einem Aspekt der Erfindung umfasst die Vorverarbeitung der Trainingsdaten die Neuabtastung, die Skalierung, das One-hot-Encoding oder die Sinustransformation der Messdaten sowie die Aufteilung der Gesamtheit an Datensätzen und die Anwendung des Sliding-Window-Algorithmus. In einer Ausführungsform umfasst die Neuabtastung ("resampling") der Messdaten die Angleichung der Abtastrate sämtlicher Signale der Messdaten. In einer vorzugsweisen Ausführungsform umfasst die Neuabtastung der Messdaten eine Abtastrate von 40 ms. In einer Ausführungsform umfasst die Skalierung der Daten die Anwendung eines MinMax-Skalierers, um sämtliche Wertebereiche der Signale auf einen einheitlichen Wertebereich anzugleichen. Ein einheitlicher Wertebereich ist insbesondere für das Training des RNN-LSTM-Modells erforderlich, da unterschiedliche Wertebereiche unterschiedliche große Einflüsse auf das Ergebnis der Berechnungen des neuronalen Netzes haben können. In einer Ausführungsform umfasst das One-hot-Encoding der Messdaten das Übersetzen von gelabelten Signalen in Zahlenwerte. Beispielsweise können einzelne Signale, welche beispielsweise einen oder mehrere Zustände eines Systems oder Teilsystems charakterisieren mit Textzeichen anstelle von Zahlenwerten versehen sein. Dies ist jedoch nicht für das Training neuronaler Netze geeignet, sodass während des One-hot-Encodings Zahlenwerte für die entsprechenden, textbasierten Zustände vergeben werden. In einer Ausführungsform umfasst die Sinustransformation der Messdaten die Anwendung einer Sinus-Transformationsfunktion auf periodische Signale, um Signalsprünge im Verlauf der Zeitreihendaten zu verhindern. In einer Ausführungsform umfasst die Aufteilung der Gesamtheit an Datensätzen, welche der Gesamtheit der Messdaten entsprechen, in einen Trainings-, einen Validierungs- und einen Testdatensatz. In einer vorzugsweisen Ausführungsform werden 90% der Messdaten als Trainingsdatensatz, 5% als Validierungsdatensatz und 5% als Testdatensatz verwendet.

In einigen Ausführungsformen umfasst die Anwendung des Sliding-Window-Algorithmus auf die Messdaten die Aufteilung der Sequenzen in Fenster (Windows) über die einzelnen Zeitschritte der Abtastung. In einigen Ausführungsformen werden innerhalb der Sequenzen unterschiedliche Fenster gebildet, umfassend ein Eingabefenster (Input), einen Versatzparameter (Shift) und ein Vorhersagefenster (Prediction). Während des Modelltrainings werden dem zu trainierenden neuronalen Netz die Zeitschritte des Eingabefensters als Eingangsgrößen zugeführt, wobei das Versatzfenster die Zeitschritte zählt, für welchen Zeitschritt die Vorhersage berechnet werden soll und das Vorhersagefenster entspricht dann der zu treffenden Vorhersage. In jeder Iteration des Trainings verschieben sich die Fenster dann um einen Zeitschritt in der Zeitreihe der Sequenz und es wird eine neue Vorhersage ausgeführt. In einer Ausführungsform umfasst eine Sequenz, innerhalb welcher ein Zielobjektverlust (ZOV) erfolgt, 32 Zeitschritte a 40 ms. In einer vorzugsweisen Ausführungsform umfasst das Eingabefenster eine Anzahl von 8 Zeitschritten, der Versatzparameter eine Anzahl von 6 Zeitschritten und das Vorhersagefenster die Anzahl eines Zeitschritts. Somit werden dem Modell in der ersten Trainingsiteration die Zeitschritte 1 - 8 als Eingabe zugeführt, wobei das Modell nunmehr die Vorhersage für den 14ten Zeitschritt treffen soll. In der zweiten Trainingsiteration werden dem Modell entsprechend die Zeitschritte 2 - 9 als Eingabe zugeführt und es soll die Vorhersage für den 15ten Zeitschritt treffen. Bis das Training nun den 32ten Zeitschritt vorhersagt, durchläuft das Modell nunmehr 19 Trainingsiterationen oder auch Fenster. Innerhalb der 32 Zeitschritte findet dabei nun der Zielobjektverlust an einer beliebigen Stelle statt, welchen das Modell während des Trainings im richtigen Fenster vorhersagen soll. Dieses Prozedere wird im weiteren Verlauf für sämtliche Trainingsdaten durchgeführt.

In einem Aspekt der Erfindung umfasst die Herstellung der Fahrtregelungsvorrichtung (180) das Training des RNN-LSTM-Modells des Verlustprädiktionsabschnitts (183) mittels der vorverarbeiteten Daten, umfassend Sequenzen von der Länge von 32 Zeitschritten. In einigen Ausführungsformen umfasst das Training des RNN-LSTM-Modells des Verlustprädiktionsabschnitts (183) die Optimierung von Hyperparametern des Modells. Hierbei wird zwischen konstanten und variablen Hyperparametern unterschieden. In einer Ausführungsform umfassen die konstanten Hyperparameter eine Eingabelänge von 8 Zeitschritten, einen Versatzparameter (Vorhersagehorizont) von 6 Zeitschritten, eine Vorhersagelänge von einem Zeitschritt, eine Sequenzlänge von 32 Zeitschritten, eine Anzahl an Trainingsepochen von 50, die Aktivierungsfunktion der Ausgabeschicht als Softmax-Funktion, ausgeglichene Klassengewichte sowie eine Verlustfunktion als kategoriale Kreuzentropie.

In einer Ausführungsform umfassen die zu optimierenden Hyperparameter die Anzahl der LSTM-Einheiten der ersten versteckten Schicht, die Anzahl der LSTM-Einheiten der zweiten versteckten Schicht, die Lernrate, die Verteilung der Gewichtsinitialisierung, den Typ des Optimierers, den Regularisierer für dir erste versteckte Schicht, die Losgröße (Batch size) sowie die Art der Aktivierungsfunktionen.

In einem Aspekt der Erfindung umfasst das trainierte RNN-LSTM-Modell des Verlustprädiktionsabschnittes (183) die folgenden Hyperparameter, wie sie in Tabelle T2 aufgelistet sind.

(T2)

| Nr. | Bezeichnung | Wert |
| --- | --- | --- |
| 1. | Anzahl LSTM-Einheiten erste versteckte Schicht | 256 |
| 2. | Anzahl LSTM-Einheiten | 64 |
| 3. | Losgröße (Batch size) | 128 |
| 4. | Initialisierung | Glorot Normalverteilung |
| 5. | Optimierer | Adam |

(fortgesetzt)

| Nr. | Bezeichnung | Wert |
|-----|-------------|------|
| 6. | Aktivierung der versteckten Schichten | Selu |
| 7. | Lernrate | 0,001 |
| 8. | Probengewichtung (t-ZOV und nt-ZOV) | 0,50904 |
| 9. | Klassengewichtung | Balanced |
| 10. | Probengewichtung (n-ZOV) | 0,2545 |
| 11. | Regularisierer (l2) | 0,04 |
| 12. | Aussetzer (Dropout) zwischen versteckten Schichten | 0,6 |

Gemäß einigen Ausführungsformen umfasst die Kategorisierung der Zielobjektverluste (ZOV) triviale Zielobjektverluste (t-ZOV) und nicht-triviale Zielobjektverluste (nt-ZOV) sowie implizit keine Zielobjektverluste (n-ZOV). Generell gilt ein Zielobjektverlust (ZOV) als der Zustand des Nichtmehrerkennens eines vorausfahrenden Zielfahrzeuges (101) oder auch Zielobjektes (ZO) durch die ACC-Funktion und somit durch die Erfassungssensorik (103). Hierbei kann der Zustand der Erkennung oder auch der Nichtmehrerkennung des Zielobjektes (ZO) als ein Signal innerhalb einer oder mehrerer Steuereinheiten des Ego-Fahrzeuges (100), vorzugsweise der Antriebssteuereinrichtung (160) und der erfindungsgemäßen Fahrtregelungsvorrichtung (180) implementiert sein. Zielobjektverluste (ZOV) sind durch ihre Ursache und ihre Art charakterisierbar. Ein Zielobjektverlust (ZOV) kann beispielsweise durch äußere Umstände des Fahrzeugumfeldes, wie der Geometrie des Streckenverlaufes, Hindernissen oder Erfassungsgrenzen der Erfassungssensorik (103) oder durch das Verhalten des einen oder der mehreren Zielobjekte (ZO) selbst, wie das Verlassen des Fahrkorridors durch einen Spurwechsel, einen Abbiegevorgang oder auch durch das Ein- und Ausscheren von vorausfahrenden Zielfahrzeugen (101) in oder aus Fahrtlücken bedingt sein. Zusätzlich kann das Zielobjekt (ZO) nach einem Zielobjektverlust (ZOV) und in einem zeitlichen Abstand dazu, wiedererkannt werden, was zu einer erneuten Zielobjekterkennung (ZOE) führt. Im Sinne der Erfindung gelten als triviale Zielobjektverluste (t-ZOV) vorzugsweise jene Zielobjektverluste (ZOV), welche auf das Verhalten der Zielobjekte (ZO) zurückzuführend sind und, wobei die verloren gegangenen Zielobjekte (ZO) nicht in einem charakteristischen Zeitabstand zum Zielobjektverlust (ZOV) wiedererkannt werden. Hingegen gelten nicht-triviale Zielobjektverluste (nt-ZOV) im Sinne der Erfindung als jene Zielobjektverluste (ZOV), welche vorzugsweise auf die äußeren Umstände des Fahrzeugumfeldes zurückzuführen sind und, wobei die verlorengegangenen Zielobjekte (ZO) innerhalb eines charakteristischen Zeitabstandes wiedererkannt werden. In einigen Ausführungsformen ist der charakteristische Zeitabstand zwischen dem Zeitpunkt $t_{out}$ des Zielobjektverlustes (ZOV) und dem Zeitpunkt $t_{in}$ der Zielobjekterkennung (ZOE) 10 Sekunden, sodass $\Delta t = t_{in} - t_{out} \leq 10s$ für einen nicht-trivialen Zielobjektverlust (nt-ZOV) und entsprechend $\Delta t > 10s$ für einen trivialen Zielobjektverlust (t-ZOV) gilt.

In einer alternativen Ausführungsform werden die Zielobjektverluste (ZOV) zusätzlich nach der Fahrzeugklasse des vorausfahrenden Zielfahrzeuges (101) als Zielobjekt (ZO) kategorisiert, wobei PKW, LKW und wenigstens vierrädrige Fahrzeuge eine Bedingung für einen nicht-trivialen Zielobjektverlust (nt-ZOV) darstellen und alle restlichen Fahrzeuge trivialen Zielobjektverlusten (ZOV) zugeordnet werden. In einer Ausführungsform umfasst die Kategorisierung der Zielobjektverluste (ZOV) nach der Fahrzeugklasse die Auswertung eines Signales der Erfassungssensorik (103) für die Fahrzeugklasse. Dieses Signal kann ein Kamerabasiertes Signal sein, was ausgehend von Bildaufnahmen Fahrzeuge wenigstens in PKW oder LKW oder vierrädrige und restliche Fahrzeuge kategorisiert.

In einer alternativen Ausführungsform werden die Zielobjektverluste (ZOV) zusätzlich nach dem Zustand des Blinkers des Ego-Fahrzeuges (100) und des entsprechenden Zielobjektes (ZO) kategorisiert, wobei ein erkannter aktiver Blinker des Ego-Fahrzeuges (100) und/oder des Zielobjektes (ZO) als ein Indiz für einen Spurwechsel gewertet und somit zu einem nicht-trivialen Zielobjektverlust (nt-ZOV) kategorisiert wird. In einigen Ausführungsformen erfolgt die Auswertung des Zustandes des Blinkers des Ego-Fahrzeuges (100) über ein bereits im System des Fahrzeuges vorhandenes Bussignal über den Zustand des Blinkers. In einigen Ausführungsformen erfolgt die Auswertung des Zustandes des Blinkers des Zielobjektes (ZO) über die Auswertung von Kameraaufnahmen der Erfassungssensorik (103), welche mittels Bilderkennungsverfahren den Zustand des Blinkers von einem oder mehrerer Zielobjekte (ZO) erfassen kann.

Der erfindungsgemäße Verlustprädiktionsabschnitt (183) ist somit in vorteilhafter Art und Weise eingerichtet, um mittels eines RNN-LSTM-Modells wenigstens die 6 genannten, grundlegenden Signale aus dem Ego-Fahrzeug (100), umfassend die ACC-Sollbeschleunigung (S01), die ACC-Zielobjekterkennung (S02), die Relativgeschwindigkeit zwischen Ego-Fahrzeug (100) und Zielobjekt (ZO) (S03), den Abstand zum Zielfahrzeug (S04), die Geschwindigkeit des Ego-Fahrzeuges (100) (S05) sowie die Beschleunigung des Ego-Fahrzeuges (100) (S06) als Eingangsgrößen zu empfangen und daraus einen Zielobjektverlust (ZOV) für 6 Zeitschritte a 40 ms in der Zukunft vorherzubestimmen und den vorherbestimmten Zielobjektverlust als trivialen-Zielobjektverlust (t-ZOV) oder nicht-trivialen Zielobjektverlust (nt-ZOV) zu kategorisieren. Fig. 5 zeigt hierzu den beispielhaften Geschwindigkeits- und Beschleunigungsverlauf einer virtuellen Trajektorie, bei einem nicht-trivialen Zielobjektverlust (nt-ZOV). Der Austrittszeitpunkt $t_{out}$ kennzeichnet hierbei den Zielobjektverlust (ZOV) durch den Erfassungsabschnitt (181) und der Eintrittszeitpunkt $t_{in}$ kennzeichnet die Zielobjekt (-wieder-) Erkennung (ZOE) durch den Erfassungsabschnitt (181). Der Zeitabstand zwischen $t_{out}$ und $t_{in}$, auch als $\Delta t = t_{in} - t_{out}$ darstellbar, entspricht der Totzeit, wobei, falls für diese $\Delta t \leq 10s$ gilt, ein nicht-trivialer Zielobjektverlust (nt-ZOV) vorliegt. Hierfür ist der Verlustprädiktionsabschnitt (183) nunmehr eingerichtet, um permanent die historischen, aufgenommenen Messdaten und Signale mittels des erfindungsgemäßen RNN-LSTM-Modells für einen vergangenen Zeitraum auszuwerten und zu einem Prädiktionszeitpunkt $t_p$ einen möglichen Zielobjektverlust (ZOV) für einen Austrittszeitpunkt $t_{out}$ vorherzubestimmen. In einer vorzugsweisen Ausführungsform entspricht der Zeitraum für die Auswertung der historischen, aufgenommenen Messdaten und Signale der Länge des Eingabefensters des Sliding-Window-Algorithmus, umfassend die 8 Zeitschritte vor dem Prädiktionszeitpunkt $t_p$. Entsprechend umfasst der Vorhersagehorizont in jener vorzugsweisen Ausführungsform den 6 Zeitschritten des Vorhersagefensters, welche den Abstand zwischen $t_p$ und $t_{out}$ definieren, wobei der Austrittszeitpunkt $t_{out}$ dem Vorhersagefenster entspricht. In einem Aspekt der Erfindung wird durch den Verlustprädiktionsabschnitt (183) der Austrittszeitpunkt $t_{out}$ vorherbestimmt.

Zusammengefasst ist der erfindungsgemäße Verlustprädiktionsabschnitt (183) dadurch gekennzeichnet, dass dieser die Zeitreihendaten von wenigstens sechs, der während der Fahrt, durch die Erfassungssensorik (103) und die Fahrzeugsensorik (141) des Ego-Fahrzeuges (100) aufgenommenen Messdaten und Signale, umfassend die ACC-Sollbeschleunigung (S01), die ACC-Zielobjekterkennung (S02), die Relativgeschwindigkeit zwischen Ego-Fahrzeug (100) und Zielobjekt (ZO) (S03), den Abstand zum Zielfahrzeug (S04), die Geschwindigkeit des Ego-Fahrzeuges (100) (S05) sowie die Beschleunigung des Ego-Fahrzeuges (100) (S06) als ein Eingangsgrößen empfängt und daraus einen Zielobjektverlust (ZOV) für einen in der Zukunft liegenden Zeitpunkt vorherbestimmt.

In einer alternativen Ausführungsform ist der erfindungsgemäße Verlustprädiktionsabschnitt (183) insbesondere dadurch gekennzeichnet, dass dieser zusätzlich die Zeitreihendaten von wenigstens 5 weiteren, der während der Fahrt, durch die Erfassungssensorik (103) und die Fahrzeugsensorik (141) des Ego-Fahrzeuges (100) aufgenommenen Messdaten und Signale, umfassend die Beschleunigung des Ego-Fahrzeuges (100), welche durch die Leistungsübertragung (130) umgesetzt wird (S07), das Soll-Antriebsmoment der Antriebseinheit (120) (S08), das Ist-Raddrehmoment (S09), den Zeitstempel für die Erfassungssensorik (103) (S10) sowie die Antriebsmomentbegrenzung (S11) als ein Eingangsgrößen empfängt und daraus einen Zielobjektverlust (ZOV) für einen in der Zukunft liegenden Zeitpunkt vorherbestimmt.

Hierbei umfasst der erfindungsgemäße Verlustprädiktionsabschnitt (183) ein RNN-LSTM-Modell, umfassend eine dichte Schicht als Eingabeschicht, die eine Anzahl an Einheiten umfasst, welche der Anzahl der Eingangsgrößen entspricht, eine erste versteckte Schicht, umfassend eine LSTM-Zelle mit 256 Einheiten, eine zweite versteckte Schicht, umfassend eine LSTM-Zelle mit 64 Einheiten und eine dichte Schicht als Ausgabeschicht, mit 3 Einheiten, wobei die versteckten Schichten mit einer selu-Funktion und die Ausgabeschicht mit einer softmax-Funktion aktiviert werden, wobei die Initialisierung mittels Glorot-Normalverteilung erfolgt.

In einem Aspekt der Erfindung umfasst die erfindungsgemäße Fahrtregelungsvorrichtung (180) einen zweiten Bewegungsprädiktionsabschnitt (184), der eine virtuelle Trajektorie (109) des vorausfahrenden Zielfahrzeuges (101), in Abhängigkeit der erfassten Bewegung des vorausfahrenden Zielfahrzeuges (101), der berechneten Trajektorie (108) des Ego-Fahrzeuges (100) und des vorherbestimmten Zielobjektverlustes (ZOV) ermittelt. Bezugnehmend auf Fig. 5 soll für den Fall, dass zum Prädiktionszeitpunkt $t_p$ durch den Verlustprädiktionsabschnitt (183) ein Zielobjektverlust (ZOV) vorherbestimmt wurde und dieser als ein nicht-trivialer-Zielobjektverlust (nt-ZOV) kategorisiert wurde, nunmehr wenigstens der Geschwindigkeitsverlauf und der Beschleunigungsverlauf des vorausfahrenden Zielfahrzeuges (101) als Zielobjekt (ZO), als virtuelle Trajektorie (109) vorherbestimmt werden, sodass die ACC-Funktion mittels des Geschwindigkeitsregelungsabschnittes (185) das Ego-Fahrzeug (100) in einer Folgefahrt auf die virtuelle Trajektorie (109) regeln kann, anstatt in die Freifahrtregelung überzugehen. Dadurch kann erfindungsgemäß vorteilhaft verhindert werden, dass bei plötzlicher Zielobjekterkennung (ZOE) ein nichttolerierbarer Ruck durch die entsprechende ACC-Funktion entsteht. Hierbei kennzeichnen die Bereiche im Geschwindigkeits- und Beschleunigungsverlauf, welche durch die Austrittsgeschwindigkeit $v_{out}$ und die Austrittsbeschleunigung $a_{out}$ des Zielobjektes (ZO) zum Austrittszeitpunkt $t_{out}$ des Zielobjektverlustes (ZOV) sowie die Eintrittsgeschwindigkeit $v_{in}$ und die Eintrittsbeschleunigung $a_{in}$ des Zielobjektes (ZO) zum Eintrittszeitpunkt $t_{in}$ der Zielobjekterkennung (ZOE), einen Zeitraum, in dem das ACC-System quasi blind agiert und keine Informationen über das Zielobjekt (ZO) besitzt. Für die Vorhersage der virtuellen Trajektorie des Zielobjektes (ZO) werden jedoch zum Prädiktionszeitpunkt $t_p$ bereits die Informationen über die Geschwindigkeiten $v_{out}$ und $v_{in}$ sowie die Beschleunigungen $a_{out}$ und $a_{in}$ benötigt.

Gemäß einem Aspekt der Erfindung berechnet der zweite Bewegungsprädiktionsabschnitt (184) die Beschleunigung des vorausfahrenden Zielfahrzeuges (101) mittels des Freistraßenterms des sogenannten "Intelligent Driver Models", oder auch Intelligent Free Driver Model" (IFDM), nach Gleichung 4a. Hierbei entspricht die Beschleunigung $a_F$ des vorausfahrenden Zielfahrzeuges (101) einer Beschleunigungsvariable a, multipliziert mit der Differenz aus 1 und des mittels des freien Exponenten $\delta$ potenzierten Quotienten aus der erfassten Geschwindigkeit $v_F$ des vorausfahrenden Zielfahrzeuges (101) und einer Referenzgeschwindigkeit $v_0$, wobei diese beispielsweise der Austrittsgeschwindigkeit $v_{out}$ entspricht.

$$a_F = a\left(1 - \left(\frac{v_F}{v_0}\right)^{\delta}\right)$$

(4a)

Unter Anwendung der Konstanten nach Gleichung 4b wird die Beschleunigung durch eine Differentialgleichung nach Gleichung 4c umformuliert.

$$A = \frac{a_{in} - a_{out}}{\left(\frac{v_{in}}{v_{out}}\right)^{\delta} - 1}$$

$$B = a_{in} - A * \left(\frac{v}{v_{out}}\right)^{\delta}$$

(4b)

$$a(t) = v'(t) = A * \left(\frac{v}{v_{out}}\right)^{\delta} + B$$

(4c)

Die Lösung der Differentialgleichung nach Gleichung 4c berechnet die Geschwindigkeit v des beobachteten, vorausfahrenden Zielfahrzeuges (101) bis zum Eintrittszeitpunkt $t_{in}$ der Zielobjekterkennung (ZOE), wobei die Geschwindigkeitstrajektorie des vorausfahrenden Zielfahrzeuges (101) in einem zeitlichen Intervall vom Austrittszeitpunkt $t_{out}$ des Zielobjektverlustes (ZOV) bis zum Eintrittszeitpunkt $t_{in}$ ermittelt wird. Der Eintrittszeitpunkt $t_{in}$ der Zielobjekterkennung (ZOE) ist jedoch im Vorhinein nicht bekannt und wird daher erfindungsgemäß nach Gleichung 4d ermittelt.

$$t_{in}(\delta) = \int_{v_{out}}^{v_{in}} \frac{1}{A * \left(\frac{v}{v_{out}}\right)^{\delta} + B} \, dv$$

(4d)

In einem Aspekt der Erfindung werden die Austrittsgeschwindigkeit $v_{out}$ und die Austrittsbeschleunigung $a_{out}$ des Zielobjektes (ZO) zum Austrittszeitpunkt $t_{out}$ des Zielobjektverlustes (ZOV) durch Extrapolation von aufgenommenen Messdaten, durch den Erfassungsabschnitt (181), von vorangegangenen Messpunkten, vor dem Prädiktionshorizont des Prädiktionszeitpunktes $t_p$ ermittelt. Vorzugsweise werden hierbei die letzten 10 Messpunkte vor dem Prädiktionszeitpunkt $t_p$ als Grundlage für die Extrapolation verwendet. Insbesondere vorzugsweise erfolgt die Extrapolation aus den letzten 10 Messpunkten der Geschwindigkeit v und der Beschleunigung a des vorausfahrenden Zielfahrzeuges (101) vor dem Prädiktionszeitpunkt $t_p$ mittels beschränkter mathematischer Funktionen, wie beispielsweise basierend auf dem Tangenshyperbolicus.

In einem Aspekt der Erfindung werden die Eintrittsgrößen der Eintrittsgeschwindigkeit $v_{in}$ und die Eintrittsbeschleunigung $a_{in}$ zum Eintrittszeitpunkt $t_{in}$ der Zielobjekterkennung (ZOE) mittels einer Transfermatrix ermittelt. Im Sinne der Erfindung ist eine Transfermatrix eine mathematische Darstellung über die aushistorischen Daten extrahierten bedingten und stark lokalisierten Häufigkeiten von Wiedereintrittsgrößen gegeben deren Werten beim Zielobjektverlust. In einem Aspekt der Erfindung umfasst die Transfermatrix Häufigkeitsverteilungen für die kinematischen Größen der Austrittsgeschwindigkeit $v_{out}$ und der Austrittsbeschleunigung $a_{out}$ des Zielobjektes (ZO) zum Austrittszeitpunkt $t_{out}$ des Zielobjektverlustes (ZOV). Für vorgegebene Intervalle aus historischen Mess- und Trainingsdaten der Austrittsgeschwindigkeit $v_{out}$ und der Austrittsbeschleunigung $a_{out}$ des Zielobjektes (ZO) zum Austrittszeitpunkt $t_{out}$ des Zielobjektverlustes (ZOV) aufgelistet und diesen Häufigkeiten zugeordnet. So kann beispielsweise eine Beziehung zwischen

erfasster Austrittsgeschwindigkeit $v_{out}$ und der dazugehörigen Häufigkeit hergestellt werden. Die Transfermatrix umfasst demnach eine Auflistung an Intervallen für die Austrittsgeschwindigkeit $v_{out}$, vorzugsweise mit einer Intervallgröße von 3km/h und in einem Bereich von 0 bis 180km/h, und für die Austrittsbeschleunigung $a_{out}$, vorzugsweise mit einer Intervallgröße von 0,3m/s$^2$ und in einem Bereich von -5 m/s$^2$ bis 5 m/s$^2$ und die jeweils dazugehörigen Häufigkeiten, sodass sowohl für die Austrittsgeschwindigkeit $v_{out}$ und die Austrittsbeschleunigung $a_{out}$ Häufigkeitsverteilungen darstellbar sind.

In einem Aspekt der Erfindung umfasst die Herstellung der Transfermatrix die Auswertung von historischen Messdaten, umfassend der Austrittsgeschwindigkeit $v_{out}$, der Austrittsbeschleunigung $a_{out}$, der Eintrittsgeschwindigkeit $v_{in}$ und der Eintrittsbeschleunigung $a_{in}$. Die Auswertung umfasst die Durchführung folgender Schritte zur Herstellung der Transfermatrix. Hierbei wird jedes Intervall für die Austrittsgeschwindigkeit $v_{out}$, beginnend mit dem ersten Intervall [0; 3] km/h durchlaufen, wobei für jeden Wert $v_{out}$ aus den historischen Messdaten eine Iterationsschleife ausgeführt wird, umfassend das Durchgehen jedes Intervalls für die Austrittsbeschleunigung $a_{out}$, beginnend mit dem ersten Intervall [-5; -4,7]m/s$^2$; Auflistung sämtlicher Eintrittswerte für die Eintrittsgeschwindigkeit $v_{in}$ und die Eintrittsbeschleunigung $a_{in}$ aus den historischen Daten, innerhalb der vorgegebenen Intervalle; Interpolation der Eintrittswerte für die Eintrittsgeschwindigkeit $v_{in}$ und die Eintrittsbeschleunigung $a_{in}$ aus benachbarten Intervallen, bei Nichtvorhandensein von Eintrittswerten und Wiederholung der Schritte, bis sämtliche Intervalle für die Austrittsbeschleunigung $a_{out}$ verarbeitet wurden. Anschließend erneutes Durchgehen sämtlicher Schritte für die weiteren Intervalle der Austrittsgeschwindigkeit $v_{out}$, solange bis sämtliche Intervalle verarbeitet wurden. Das Ergebnis der Herstellung der Transfermatrix umfasst nunmehr eine tabellarische Auflistung der Intervalle der Austrittsgeschwindigkeit $v_{out}$ als Index in der ersten Spalte, dazugehörige Werte für die Austrittsgeschwindigkeit $v_{out}$, aus den historischen Zeitreihendaten in der zweiten Spalte, dazugehörige Intervalle für die Austrittsbeschleunigung $a_{out}$ in der dritten Spalte, dazugehörige Werte für die Austrittsbeschleunigung $a_{out}$, aus den historischen Zeitreihendaten in der vierten Spalte, dazugehörige Intervalle für die Eintrittsgeschwindigkeit $v_{in}$ in der fünften Spalte, dazugehörige Werte für die Eintrittsgeschwindigkeit $v_{in}$, aus den Häufigkeitsverteilungen in der sechsten Spalte, dazugehörige Intervalle für die Eintrittsbeschleunigung $a_{in}$ in der siebten Spalte, dazugehörige Werte für die Eintrittsbeschleunigung $a_{in}$, aus den Häufigkeitsverteilungen in der achten Spalte. In einer alternativen Ausführungsform umfasst die Transfermatrix zusätzlich eine Auflistung des zugehörigen Abstandes zum Zielobjekt (ZO) in einer neunten Spalte. In einer alternativen Ausführungsform umfasst die Transfermatrix zusätzlich eine Auflistung des zugehörigen Eintrittszeitpunktes $t_{in}$ der Wiedererkennung des Zielobjektes (ZOE) in einer zehnten Spalte. Damit erfolgt die Vorherbestimmung der Eintrittsgeschwindigkeit $v_{in}$ und der Eintrittsbeschleunigung $a_{in}$ des Zielobjektes (ZO) zum Eintrittszeitpunkt $t_{in}$ der Zielobjekterkennung (ZOE) in einem Aspekt der Erfindung, mittels einer häufigkeitsverteilungsbasierten Zuordnung zur Austrittsgeschwindigkeit $v_{out}$ und Austrittsbeschleunigung $a_{out}$ des vorausfahrenden Zielfahrzeuges (101), welche mittels Extrapolation vorangegangener Messdaten der Geschwindigkeit $v$ und der Beschleunigung $a$ des vorausfahrenden Zielfahrzeuges (101) vorherbestimmt werden, welche durch den Erfassungsabschnitt aufgenommen wurden, auf den Austrittszeitpunkt $t_{out}$ ermittelt werden, welcher durch den Verlustprädiktionsabschnitt (183) vorherbestimmt wurde.

Sind die Austrittsgeschwindigkeit $v_{out}$ und die Austrittsbeschleunigung $a_{out}$ für den Austrittszeitpunkt $t_{out}$ zum Prädiktionszeitpunkt $t_p$ durch Interpolation vorangegangener Messdaten und die Eintrittsgeschwindigkeit $v_{in}$ und die Eintrittsbeschleunigung $a_{in}$ für den Eintrittszeitpunkt $t_{in}$ aus der Transfermatrix bekannt, muss lediglich der freie Exponent $\delta$ geschätzt werden, um die Differentialgleichung nach Gleichung 4d zu lösen, um den Eintrittszeitpunkt $t_{in}$ vorherzubestimmen. In einem Aspekt der Erfindung erfolgt die Schätzung des freien Exponenten $\delta$ durch Berechnung des Integrals nach Gleichung 4d für Intervalle von $\delta$ im Bereich von [-100; -1] und [1; 100].

Ist die Eintrittszeit $t_{in}$ somit bekannt, erfolgt in einem Aspekt der Erfindung die Vorherbestimmung der gefahrenen Strecke $s(t)$ als virtuellen Trajektorie des vorausfahrenden Zielfahrzeuges (101) nach Gleichung 4e.

$$s(t) = \int_{t_{out}}^{t} v(t')dt'$$

(4e)

In einem Aspekt der Erfindung umfasst die Herstellung der erfindungsgemäßen Fahrtregelungsvorrichtung (180) die Herstellung des zweiten Bewegungsprädiktionsabschnittes (184) mittels Extraktion von relevanten Signalen, nach Tabelle T3, aus den aufgenommenen Messdaten und Signalen.

**EP 4 588 744 A1**

(T3)

| Nr. | Bezeichnung |
|-----|-------------|
| S24 | Geschwindigkeit des Ego-Fahrzeugs bei ZOV in km/h |
| S25 | Relative Geschwindigkeit bei ZOV in m/s |
| S26 | Geschwindigkeit des Zielobjekts bei ZOV in km/h |
| S27 | Beschleunigung des Ego-Fahrzeugs bei ZOV in m/s2 |
| S28 | Relative Beschleunigung bei ZOV in m/s2 |
| S29 | Beschleunigung des Zielobjekts bei ZOV in m/s2 |
| S30 | Abstand zw. Ego-Fahrzeug und Zielobjektfahrzeug bei ZOV in m |
| S31 | Zeitstempel bei ZOV in s |
| S32 | Geschwindigkeit des Ego-Fahrzeugs bei Wiedereintritt (ZOE) in km/h |
| S33 | Relative Geschwindigkeit bei Wiedereintritt (ZOE) in m/s |
| S34 | Geschwindigkeit des Zielobjekts bei Wiedereintritt (ZOE) in km/h |
| S35 | Beschleunigung des Ego-Fahrzeuges bei Wiedereintritt (ZOE) in m/s2 |
| S36 | relative Beschleunigung bei Wiedereintritt (ZOE) in m/s2 |
| S37 | Beschleunigung des Zielobjekts bei Wiedereintritt (ZOE) in m/s2 |
| S38 | Abstand zw. Ego-Fahrzeug und Zielobjektfahrzeug bei Zielobjektverlust in m |
| S39 | Zeitstempel bei Wiedereintritt (ZOE) in s |
| S40 | Zeitdifferenz Eintrittszelt - Totzeit in s |

In einigen Ausführungsformen umfasst die Herstellung des zweiten Bewegungsprädiktionsabschnitts (184) eine oder mehrere, der bereits beschriebenen Vorgänge, wie die Sammlung von Messdaten, die Extraktion von relevanten Signalen aus den Messdaten sowie die Vorverarbeitung der Trainingsdaten. In einigen Ausführungsformen umfassen die Messdaten und Signale die gleichen, wie zur Herstellung des ersten Bewegungsprädiktionsabschnitts (182) und des Verlustprädiktionsabschnitts (183). Zusammenfassend ist der erfindungsgemäße zweite Bewegungsprädiktionsabschnitt (184) dadurch gekennzeichnet, dass die Ermittlung der virtuellen Trajektorie (109) des vorausfahrenden Zielfahrzeuges (101), die Vorherbestimmung der Eintrittsgeschwindigkeit $v_{in}$, der Eintrittsbeschleunigung $a_{in}$ und des Eintrittszeitpunktes $t_{in}$ der Wiedererkennung (ZOE) des vorausfahrenden Zielfahrzeuges (101) zum Prädiktionszeitpunkt $t_p$ umfasst, die mittels einer häufigkeitsverteilungsbasierten Transfermatrix, in Abhängigkeit der Austrittsgeschwindigkeit $v_{out}$ und der Austrittsbeschleunigung $a_{out}$ des vorausfahrenden Zielfahrzeuges (101) geschätzt werden, wobei die Austrittsgeschwindigkeit $v_{out}$ und die Austrittsbeschleunigung $a_{out}$ mittels Extrapolation vorangegangener Messdaten für die Geschwindigkeit $v_f$ und Beschleunigung $a_F$ des vorausfahrenden Zielfahrzeuges (101), die durch den Erfassungsabschnitt (181) aufgenommen wurden, auf den Austrittszeitpunkt $t_{out}$, ermittelt werden, der durch den Verlustprädiktionsabschnitt (183) zum Prädiktionszeitpunkt $t_p$ vorherbestimmt wurde.

In einem Aspekt der Erfindung umfasst die erfindungsgemäße Fahrtregelungsvorrichtung (180) einen Geschwindigkeitsregelungsabschnitt (185), der die Geschwindigkeit des Ego-Fahrzeuges (100), in Abhängigkeit des vorherbestimmten Zielobjektverlustes (ZOV), dessen Kategorisierung und der ermittelten virtuellen Trajektorie (109) des vorausfahrenden Fahrzeuges (101) regelt. Der Geschwindigkeitsregelungsabschnitt (185) führt hierbei eine Regelung der Fahrt des Ego-Fahrzeuges (100), insbesondere der Geschwindigkeit aus, unter Berücksichtigung von empfangenen Informationen aus dem Verlustprädiktionsabschnitt (183) und dem zweiten Bewegungsprädiktionsabschnitt (184).

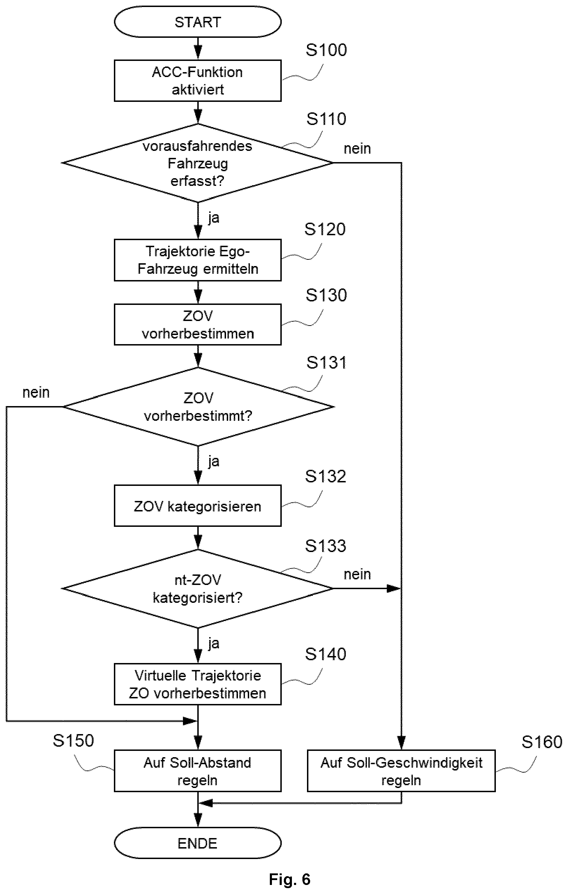

In einem Aspekt der Erfindung führt die erfindungsgemäße Fahrtregelungsvorrichtung (180) ein Verfahren zur Regelung der Geschwindigkeit des Ego-Fahrzeuges (100) aus. **Fig. 6** zeigt den Prozessablauf eines solchen Verfahrens. Bezugnehmend auf Fig. 6 wird das Verfahren zur Regelung der Geschwindigkeit des Ego-Fahrzeuges (100) in einer Ausführungsform, vorzugsweise während der Ausführung einer ACC-Funktion des Ego-Fahrzeuges (100) ausgeführt. Somit beginnt das erfindungsgemäße Verfahren in einem nullten Schritt (S100) mit der Aktivierung einer ACC-Funktion. In einem ersten Schritt (S110) wird die Bewegung des Ego-Fahrzeuges (100) und einer oder mehrerer vorausfahrender Fahrzeuge (101) durch die Erfassungssensorik (103) des Erfassungsabschnittes (181) erfasst.

Wenn beispielsweise kein vorausfahrendes Fahrzeug (101) erfasst wird, empfängt der Geschwindigkeitsregelungsabschnitt (185) diese Information vom Erfassungsabschnitt (181) und regelt das Ego-Fahrzeug (100), um eine Beschleunigung zu aktivieren und auf eine voreingestellte Soll-Geschwindigkeit, in der sogenannten Freifahrtregelung, zu beschleunigen und diese zu halten. In einer Ausführungsform umfasst die Freifahrtregelung durch den Geschwindigkeitsregelungsabschnitt (185) die Übertragung von Informationen auf die Antriebssteuereinrichtung (160) und die Leistungsübertragungssteuereinrichtung (170), um über diese die Antriebseinheit (120) und die Leistungsübertragung (130) zu steuern.

Wenn beispielsweise mehrere vorausfahrende Fahrzeuge (101) erfasst werden, identifiziert der Erfassungsabschnitt (181) eines der vorausfahrenden Fahrzeuge (101) als Zielobjekt (ZO), unter Berücksichtigung genannter physikalischer Größen, wie beispielsweise der ermittelten Kurskrümmung $\kappa$ des Ego-Fahrzeuges (100), der Zuordnung eines Fahrkorridors zum Ego-Fahrzeug (100) oder einer vorgegebenen Sollbeschleunigung des Ego-Fahrzeuges (100) und Weiterer. Wenn beispielsweise genau ein vorausfahrendes Fahrzeug (101) erfasst wird, identifiziert der Erfassungsabschnitt (181) dieses als Zielobjekt (ZO), unter Berücksichtigung genannter physikalischer Größen, wie beispielsweise der ermittelten Kurskrümmung $\kappa$ des Ego-Fahrzeuges (100), der Zuordnung eines Fahrkorridors zum Ego-Fahrzeug (100) oder einer vorgegebenen Sollbeschleunigung des Ego-Fahrzeuges (100) und Weiterer. Ist ein Zielobjekt identifiziert, springt der Prozessablauf des erfindungsgemäßen Verfahrens zu einem zweiten Schritt (S120), der Ermittlung der Trajektorie des Ego-Fahrzeuges (100).

Die Ermittlung der Trajektorie des Ego-Fahrzeuges (100) nach dem zweiten Schritt (S120) wird erfindungsgemäß durch den ersten Bewegungsprädiktionsabschnitt (182) ausgeführt und umfasst die Ermittlung einer prädizierten Kurskrümmung $\kappa_{pred}$ für einen in der Zukunft liegenden Zeitpunkt, wobei die prädizierte Kurskrümmung $\kappa_{pred}$ aus der Vorhersage des Streckenverlaufes des Ego-Fahrzeuges (100) abgeleitet wird. Der erste Bewegungsprädiktionsabschnitt (182) umfasst hierzu ein Encoder-Decoder-LSTM-Netzwerk, mit einer Eingabeschicht für Stichproben der Dimension (100, 2), einer Encoder-Schicht, umfassend eine LSTM-Zelle mit 50 Einheiten, einen RepeatVector, umfassend eine Länge von 50 Einheiten, eine Decoder-Schicht, umfassend 50 Einheiten sowie eine Ausgabeschicht, umfassend eine dichte Schicht mit 50 Einheiten umfasst, wobei jede Schicht mit der Tangenshyperbolicus-Funktion aktiviert wird. In einer Ausführungsform umfasst die Ermittlung der Trajektorie des Ego-Fahrzeuges (100) mittels des Encoder-Decoder-LSTM-Netzwerkes das Empfangen von zweidimensionalen x- und y-Koordinaten des vorangegangenen Streckenverlaufs der letzten 100 Meter Fahrt als Eingangsgrößen und das Vorherbestimmen von 50 Metern des zukünftigen Streckenverlaufes des Ego-Fahrzeuges (100). Ist die Trajektorie des Ego-Fahrzeuges (100) für einen in der Zukunft liegenden Zeitpunkt vorherbestimmt, springt der Prozessablauf des erfindungsgemäßen Verfahrens zu einem dritten Schritt (130), der Vorherbestimmung eines Zielobjektverlustes (ZOV).

Die Vorherbestimmung des Zielobjektverlustes (ZOV) wird erfindungsgemäß durch den Verlustprädiktionsabschnitt (183) ausgeführt und umfasst eine Abfrage, ob überhaupt ein Zielobjektverlust (ZOV) vorherbestimmt wurde, in einem ersten, untergeordneten Schritt (S131), die Kategorisierung eines potentiellen Zielobjektverlustes (ZOV) in einem zweiten, untergeordneten Schritt (S132) sowie die Abfrage, ob der vorherbestimmte Zielobjektverlust (ZOV) als ein nicht-trivialer Zielobjektverlust (nt-ZOV) kategorisiert wurde, in einem dritten, untergeordneten Schritt (S133). Wobei die Vorherbestimmung eines Zielobjektverlustes (ZOV) das Empfangen der Zeitreihendaten von wenigstens sechs, der während der Fahrt, durch die Erfassungssensorik (103) und die Fahrzeugsensorik (141) des Ego-Fahrzeuges (100) aufgenommenen Messdaten und Signale, umfassend die ACC-Sollbeschleunigung (S01), die ACC-Zielobjekterkennung (S02), die Relativgeschwindigkeit zwischen Ego-Fahrzeug (100) und Zielobjekt (ZO) (S03), den Abstand zum Zielfahrzeug (S04), die Geschwindigkeit des Ego-Fahrzeuges (100) (S05) sowie die Beschleunigung des Ego-Fahrzeuges (100) (S06) als ein Eingangsgrößen und das Vorherbestimmen eines Zielobjektverlustes (ZOV) für einen in der Zukunft liegenden Zeitpunkt, daraus umfasst.

Wenn beispielsweise durch den Erfassungsabschnitt (181), im ersten Schritt (S110) ein Zielobjekt (ZO) identifiziert wurde und durch den Verlustprädiktionsabschnitt (183) im dritten Schritt kein Zielobjektverlust (ZOV) vorherbestimmt wird, empfängt der Geschwindigkeitsregelungsabschnitt (181) diese Information und regelt das Ego-Fahrzeug (100) in einer Ausführungsform, um eine Beschleunigung zu deaktivieren und/oder die Bewegung des Ego-Fahrzeuges (100) so zu beeinflussen, um einen voreingestellten Sollabstand zum identifizierten Zielobjekt (ZO) herbeizuführen.

Wenn beispielsweise durch den Verlustprädiktionsabschnitt (183) ein Zielobjektverlust (ZOV) im dritten Schritt (S130) vorherbestimmt wird, springt der Prozessablauf zum zweiten untergeordneten Schritt (S132), um den vorherbestimmten Zielobjektverlust (ZOV) zu kategorisieren. Die Kategorisierung des vorherbestimmten Zielobjektverlust (ZOV) durch den Verlustprädiktionsabschnitt (183) umfasst die Anwendung eines vortrainierten, erfindungsgemäßen RNN-LSTM-Modells, umfassend eine dichte Schicht als Eingabeschicht, die eine Anzahl an Einheiten umfasst, welche der Anzahl der Eingangsgrößen entspricht, eine erste versteckte Schicht, umfassend eine LSTM-Zelle mit 256 Einheiten, eine zweite versteckte Schicht, umfassend eine LSTM-Zelle mit 64 Einheiten und eine dichte Schicht als Ausgabeschicht, mit 3 Einheiten, wobei die versteckten Schichten mit einer selu-Funktion und die Ausgabeschicht mit einer softmax-Funktion aktiviert werden, wobei die Initialisierung mittels Glorot-Normalverteilung erfolgt.

Wenn beispielsweise durch den Verlustprädiktionsabschnitt (183) ein vorherbestimmter Zielobjektverlust (ZOV) im zweiten untergeordneten Schritt (S132) als ein trivialer Zielobjektverlust (t-ZOV), also kein nicht-trivialer Zielobjektverlust (nt-ZOV), kategorisiert wurde, springt der Prozessablauf im dritten untergeordneten Schritt (S133) auf den verneinenden Pfad, wobei der Geschwindigkeitsregelungsabschnitt (185) diese Information empfängt und das Ego-Fahrzeug (100) auf eine Sollgeschwindigkeit regelt.

Wenn beispielsweise durch den Verlustprädiktionsabschnitt (183) ein vorherbestimmter Zielobjektverlust (ZOV) im zweiten untergeordneten Schritt (S132) als ein nicht-trivialer Zielobjektverlust (nt-ZOV) kategorisiert wurde, springt der Prozessablauf im dritten untergeordneten Schritt (S133) auf den vierten Schritt (S140), des Vorherbestimmens der virtuellen Trajektorie (109) des identifizierten Zielobjektes (ZO). Wobei die Vorherbestimmung der virtuellen Trajektorie des als Zielobjekt (ZO) identifizierten vorausfahrenden Fahrzeuges (101) im vierten Schritt (140) durch den zweiten Bewegungsprädiktionsabschnitt (184) ausgeführt wird, umfassend die Vorherbestimmung der Eintrittsgeschwindigkeit $v_{in}$, der Eintrittsbeschleunigung $a_{in}$ und des Eintrittszeitpunktes $t_{in}$ der Wiedererkennung (ZOE) des vorausfahrenden Zielfahrzeuges (101) zum Prädiktionszeitpunkt $t_p$, die mittels einer häufigkeitsverteilungsbasierten Transfermatrix, in Abhängigkeit der Austrittsgeschwindigkeit $v_{out}$ und der Austrittsbeschleunigung $a_{out}$ des vorausfahrenden Zielfahrzeuges (101) geschätzt werden, wobei die Austrittsgeschwindigkeit $v_{out}$ und die Austrittsbeschleunigung $a_{out}$ mittels Extrapolation vorangegangener Messdaten für die Geschwindigkeit $v$ und Beschleunigung $a$ des vorausfahrenden Zielfahrzeuges (101), die durch den Erfassungsabschnitt (181) aufgenommen wurden, auf den Austrittszeitpunkt $t_{out}$, ermittelt werden, der durch den Verlustprädiktionsabschnitt (183) zum Prädiktionszeitpunkt $t_p$ vorherbestimmt wurde. Ist die virtuelle Trajektorie (109) des als Zielobjekt (ZO) identifizierten vorausfahrenden Fahrzeuges (101) vorherbestimmt, springt der Prozessablauf zu einem fünften Schritt (S150), der Regelung des Ego-Fahrzeuges (100) auf einen Sollabstand zur virtuellen Trajektorie (109) des Zielobjektes (ZO). Falls die virtuelle Trajektorie nicht im Erfassungsbereich der Sensorik des Ego-Fahrzeuges liegt, so wird diese im durch den zweiten Bewegungsprädiktionsabschnitt (184) so lange mit bestimmten mathematischen Operationen deformiert (z. B. virtuelle Verkürzung des Abstandes Ego-Virtuelle ZO, virtuelle Reduktion der Straßenkrümmung, etc.) bis sie es tut.

Somit ist der Geschwindigkeitsregelungsabschnitt erfindungsgemäß vorteilhaft eingerichtet, um Informationen an die Antriebssteuereinrichtung (160) und/oder an die Leistungsübertragungseinrichtung (170) zu übermitteln, um das Ego-Fahrzeug (100) zu regeln, um eine Beschleunigung zu verhindern und die Geschwindigkeit des Ego-Fahrzeuges (100) so einzustellen, um einen voreingestellten Sollabstand zu einem als Zielobjekt (ZO) identifizierten vorausfahrenden Fahrzeug (101) herbeizuführen, immer dann, wenn kein Zielobjektverlust (ZOV) vorherbestimmt wurde, oder, um einen voreingestellten Sollabstand zu einer virtuellen Trajektorie (109) des als Zielobjekt (ZO) identifizierten vorausfahrenden Fahrzeuges (101) herbeizuführen, immer dann, wenn ein Zielobjektverlust (ZOV) vorherbestimmt und dieser als ein nicht-trivialer Zielobjektverlust (nt-ZOV) kategorisiert wurde, oder, um eine Beschleunigung zu aktivieren und die Geschwindigkeit des Ego-Fahrzeuges (100) auf eine voreingestellte Soll-Geschwindigkeit zu regeln, immer dann, wenn ein Zielobjektverlust (ZOV) vorherbestimmt und dieser als ein trivialer Zielobjektverlust (t-ZOV) kategorisiert wurde oder, wenn kein vorausfahrendes Zielfahrzeug (101) als Zielobjekt (ZO) identifiziert wurde.

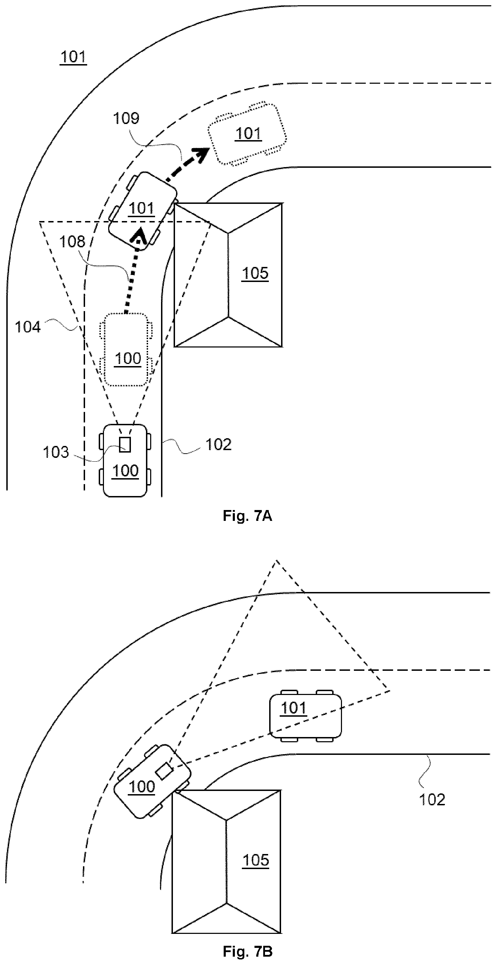

Bezugnehmend auf die **Figuren 7A** und **7B** soll das erfindungsgemäße Verfahren, unter Anwendung der erfindungsgemäßen Vorrichtung anhand eines vorzugsweisen Ausführungsbeispiels näher erläutert werden. In **Fig. 7A** ist ein Fahrszenario dargestellt, umfassend ein Ego-Fahrzeug (100) und ein vorausfahrendes Zielfahrzeug (101), welche auf einer gemeinsamen Fahrbahn (102), innerhalb einer gemeinsamen Fahrspur fahren. Das dargestellte Fahrszenario bildet den Fall eines nicht-trivialen Zielobjektverlustes (nt-ZO) des vorausfahrenden Zielfahrzeuges (101) ab, wobei das vorausfahrende Zielfahrzeug (101) zu einem Austrittszeitpunkt $t_{out}$ zunächst nicht mehr von der Erfassungssensorik (103) des Ego-Fahrzeuges (104) erfasst wird, durch einen Zielobjektverlust (ZOV) und zu einem späteren Eintrittszeitpunkt $t_{in}$ wiedererkannt wird, durch eine Zielobjekterkennung (ZOE). Das Ego-Fahrzeug (100) umfasst hierbei eine oder mehrere Elemente einer Erfassungssensorik (103), welche einen kegelförmig, gestrichelt dargestellten Erfassungsbereich (104) des Fahrzeugumfeldes des Ego-Fahrzeuges (100) abdeckt. Der Streckenverlauf der Fahrbahn (102) bildet eine Rechtskurve aus, an deren Kurveneintritt das vorausfahrende Zielfahrzeug (101) positioniert ist. In der Rechtskurve befindet sich zusätzlich ein Hindernis (105), beispielsweise ein Gebäude, welches insbesondere die Sicht auf den Kurvenausgang für das Ego-Fahrzeug (100) weiter einschränkt. Das Ego-Fahrzeug (100) und das vorausfahrende Fahrzeug (101) sind zu einem ersten Zeitpunkt in Volllinien und zu einem zweiten Zeitpunkt in punktierten Linien dargestellt. Der erste Zeitpunkt entspricht dem Prädiktionszeitpunkt $t_p$. Der zweite Zeitpunkt entspricht dem Austrittszeitpunkt $t_{out}$. In Fig. 7B ist ein dritter Zeitpunkt dargestellt. Der dritte Zeitpunkt kennzeichnet den Eintrittszeitpunkt $t_{in}$, also die Wiedererkennung des Zielobjektes (ZOE).

Wenn nun beispielsweise die ACC-Funktion des Ego-Fahrzeuges (100) aktiviert ist und die erfindungsgemäße Fahrtregelungsvorrichtung (180) das erfindungsgemäße Verfahren ausführt, erfasst der Erfassungsabschnitt (181) mit den Mitteln der Erfassungssensorik (103), beispielsweise mittels eines Radar-Sensors, das vorausfahrende Zielfahrzeug (101) zum Prädiktionszeitpunkt $t_p$, gemäß dem ersten Schritt (S110) des Prozessablaufes des erfindungsgemäßen Verfahrens. Weiterhin identifiziert der Erfassungsabschnitt (181) das erfasste vorausfahrende Zielfahrzeug (101) als Zielobjekt (ZO), durch Erfassung der Bewegung des Ego-Fahrzeuges (100), mittels Ermittlung der Kurskrümmung $\kappa$, der Zuordnung eines Fahrkorridors, der Erfassung der Sollbeschleunigung des Ego-Fahrzeuges (100) und der Zuordnung des vorausfahrenden Zielfahrzeuges (101) zu dem Fahrkorridor. Anschließend wird die Information über die Erfassung des vorausfahrenden Zielfahrzeuges (101) und die Identifikation von diesem als Zielobjekt (ZO) an die erste Bewegungsprädiktionseinrichtung (182) übermittelt.

Die erste Bewegungsprädiktionseinrichtung (182) ermittelt nun die aktuelle Trajektorie des Ego-Fahrzeuges (100), unter Anwendung eines erfindungsgemäßen Encoder-Decoder-LSTM-Netzwerkes, gemäß einem zweiten Schritt (S120) des erfindungsgemäßen Verfahrens. Hierbei ermittelt die erste Bewegungsprädiktionseinrichtung (182) eine prädizierte Kurskrümmung $\kappa_{pred}$ als virtuelle Trajektorie (106) des Ego-Fahrzeuges (100), für einen in der Zukunft liegenden Zeitpunkt, unter Berücksichtigung eines prädizierten Streckenverlaufes. Die Information über die virtuelle Trajektorie(108) des Ego-Fahrzeuges (100) werden an den Verlustprädiktionsabschnitt (183) übermittelt.

Der Verlustprädiktionsabschnitt (183) empfängt die Informationen über die virtuelle Trajektorie (108) des Ego-Fahrzeuges (100), aus dem ersten Bewegungsprädiktionsabschnitt (182) und über die Bewegung des vorausfahrenden Zielfahrzeuges (101), aus dem Erfassungsabschnitt (181) und bestimmt daraus einen Zielobjektverlust (ZOV) vorher. Im dargestellten Ausführungsbeispiel entsteht der Zielobjektverlust (ZOV) zum zweiten Zeitpunkt, dem Austrittszeitpunkt $t_{out}$, wobei sich das Ego-Fahrzeug (100) im Kurveneingang und das vorausfahrende Zielfahrzeug (101) im Kurvenausgang befindet, wobei das vorausfahrende Zielfahrzeug (101) nicht mehr durch den Erfassungsbereich (104) der Erfassungssensorik (103) des Ego-Fahrzeuges (100) erfasst wird, aufgrund des Streckenverlaufes der Fahrbahn (102) und der Sichteinschränkung durch das Hindernis (105). Hierbei empfängt der Verlustprädiktionsabschnitt (183) die Zeitreihendaten von wenigstens sechs, der während der Fahrt, durch die Erfassungssensorik (103) und die Fahrzeugsensorik (141) des Ego-Fahrzeuges (100) aufgenommenen Messdaten und Signale, umfassend die ACC-Sollbeschleunigung (S01), die ACC-Zielobjekterkennung (S02), die Relativgeschwindigkeit zwischen Ego-Fahrzeug (100) und Zielobjekt (ZO) (S03), den Abstand zum Zielfahrzeug (S04), die Geschwindigkeit des Ego-Fahrzeuges (100) (S05) sowie die Beschleunigung des Ego-Fahrzeuges (100) (S06) als ein Eingangsgrößen und bestimmt daraus, unter Anwendung eines erfindungsgemäßen RNN-LSTM-Modells, in einem dritten Schritt (S130) des erfindungsgemäßen Verfahrens, einen Zielobjektverlust (ZOV) für den Austrittszeitpunkt $t_{out}$ vorher. Der vorherbestimmte Zielobjektverlust (ZOV) wird weiterhin in einen nicht-trivialen Zielobjektverlust (nt-ZOV) kategorisiert, gemäß einem zweiten, untergeordneten Schritt (S132). Die Informationen über den vorherbestimmten, nicht-trivialen Zielobjektverlust (nt-ZOV) werden anschließend an den zweiten Bewegungsprädiktionsabschnitt (184) übermittelt.

Der zweite Bewegungsprädiktionsabschnitt (184) empfängt die Informationen über den nicht-trivialen Zielobjektverlust (nt-ZOV), aus dem Verlustprädiktionsabschnitt (183) und über die Bewegung des Ego-Fahrzeuges (100) und des vorausfahrenden Zielfahrzeuges (101), aus dem Erfassungsabschnitt (181) und bestimmt daraus eine virtuelle Trajektorie (109) des vorausfahrenden Zielfahrzeuges (101) vorher, gemäß dem vierten Schritt (S140) des erfindungsgemäßen Verfahrens. Hierbei ermittelt der zweite Bewegungsprädiktionsabschnitt (184) die virtuellen Trajektorie (109) des vorausfahrenden Zielfahrzeuges (101) durch die Vorherbestimmung der Eintrittsgeschwindigkeit $v_{in}$, der Eintrittsbeschleunigung $a_{in}$ und des Eintrittszeitpunktes $t_{in}$ der Wiedererkennung (ZOE) des vorausfahrenden Zielfahrzeuges (101) zum Prädiktionszeitpunkt $t_p$, die mittels einer häufigkeitsverteilungsbasierten Transfermatrix, in Abhängigkeit der Austrittsgeschwindigkeit $v_{out}$ und der Austrittsbeschleunigung $a_{out}$ des vorausfahrenden Zielfahrzeuges (101) geschätzt werden, wobei die Austrittsgeschwindigkeit $v_{out}$ und die Austrittsbeschleunigung $a_{out}$ mittels Extrapolation vorangegangener Messdaten für die Geschwindigkeit $v_f$ und Beschleunigung $a_F$ des vorausfahrenden Zielfahrzeuges (101), die durch den Erfassungsabschnitt (181) aufgenommen wurden, auf den Austrittszeitpunkt $t_{out}$, ermittelt werden, der durch den Verlustprädiktionsabschnitt (183) zum Prädiktionszeitpunkt $t_p$ vorherbestimmt wurde. Die Information über die deformierte, virtuelle Trajektorie (109) des vorausfahrenden Zielfahrzeuges (101) wird an den Geschwindigkeitsregelungsabschnitt (185) übermittelt.

Somit ist zum Prädiktionszeitpunkt $t_p$ dem Geschwindigkeitsregelungsabschnitt (181) bekannt, dass zum Austrittszeitpunkt $t_{out}$, wobei das vorausfahrende Zielfahrzeug (101) den Kurvenausgang erreicht und die Erfassungssensorik (103) des Ego-Fahrzeuges (100) dieses nicht mehr erfassen wird, ein nicht-trivialer Zielobjektverlust (nt-ZOV) erfolgen wird, hervorgehend aus den Informationen des Verlustprädiktionsabschnittes (183), sowie, dass zum Eintrittszeitpunkt $t_{in}$, wobei das Ego-Fahrzeug (100) die Kurve soweit passiert haben wird, dass die Erfassungssensorik (103) das vorausfahrende Zielfahrzeug (101) erneut erfasst und wie sich das vorausfahrende Zielfahrzeug (101) im Zeitraum vom Austrittszeitpunkt $t_{out}$ bis zum Eintrittszeitpunkt $t_{in}$, schätzungsweise bewegen wird, hervorgehend aus den Informationen des zweiten Bewegungsprädiktionsabschnittes (184). Aus diesen Informationen setzt der Geschwindigkeitsregelungsabschnitt (185) nunmehr Anweisungen an die Antriebssteuereinrichtung (160) und/oder an die Leistungsübertragungssteuereinrichtung (170) des Ego-Fahrzeuges (100) um, um die Beschleunigung des Ego-Fahrzeuges (100) zu verhindern und dessen Geschwindigkeit so zu beeinflussen, dass ein durch die ACC-Funktion, voreingestellter Sollabstand zur deformierten, virtuellen Trajektorie (109) des vorausfahrenden Zielfahrzeuges (101) hergestellt wird, gemäß dem fünften Schritt (S150) des erfindungsgemäßen Verfahrens.

Auf diese Art und Weise wird erfindungsgemäß vorteilhaft ein Ruck verhindert, der entstehen würde, wenn das Ego-Fahrzeug (100), ohne die erfindungsgemäße Fahrtregelungseinrichtung (180), anstelle einer abstandsbasierten Geschwindigkeitsregelung auf eine virtuelle Trajektorie (109) des vorausfahrenden Zielfahrzeuges (101), in eine Freifahrtregelung übergehen würde und zum dritten Zeitpunkt das vorausfahrende Zielfahrzeug (101) plötzlich und unerwartet wiedererfassen würde, wobei eine abrupte Anpassung der Geschwindigkeit durch verstärkte Beschleunigung herbeigeführt werden würde.

**Bezugszeichenliste**

| 100 | Ego-Fahrzeug |
|---|---|
| 101 | Vorausfahrendes Zielfahrzeug |
| 102 | Fahrbahn |
| 103 | Erfassungssensorik |
| 104 | Erfassungsbereich |
| 105 | Hindernis |
| 106 | Verkehrzeichen |
| 107 | Wiedererkennung |
| 108 | Virtuelle Trajektorie Ego-Fahrzeug |
| 109 | Virtuelle Trajektorie Zielfahrzeug |
| 120 | Antriebseinheit |
| 130 | Leistungsübertragungseinheit |
| 140 | Fahrwerk |
| 141 | Fahrzeugsensorik |
| 150 | Fahrzeugsteuereinrichtung |
| 160 | Antriebssteuereinrichtung |
| 170 | Leistungsübertragungssteuereinrichtung |
| 180 | Fahrtregelungsvorrichtung |
| 181 | Erfassungsabschnitt |
| 182 | Erster Bewegungsprädiktionsabschnitt |
| 183 | Zweiter Bewegungsprädiktionsabschnitt |
| 184 | Verlustprädiktionsabschnitt |
| 185 | Geschwindigkeitsregelungsabschnitt |
| S100 | ACC-Funktion aktiviert |
| S110 | Vorausfahrendes Fahrzeug erfassen |
| S120 | Trajektorie Ego-Fahrzeug ermitteln |
| S130 | ZOV vorherbestimmen |
| S131 | ZOV vorherbestimmt? |
| S132 | ZOV kategorisieren |
| S133 | nt-ZOV kategorisiert? |
| S140 | virtuelle Trajektorie ZO vorherbestimmen |
| S150 | Auf Sollabstand regeln |
| S160 | Auf Sollgeschwindigkeit regeln |

**Patentansprüche**

1. Fahrtregelungsvorrichtung (180) für ein Ego-Fahrzeug (100), die eine abstandsbasierte Geschwindigkeitsregelungsfunktion (ACC) ausführt, um das Ego-Fahrzeug (100) in einer Folgefahrt, in Abhängigkeit der Fahrt eines vorausfahrenden Zielfahrzeuges (101) zu regeln, umfassend einen Erfassungsabschnitt (181), der die Bewegung des Ego-Fahrzeuges (100) und eines oder mehrerer vorausfahrender Zielfahrzeuge (101) erfasst und daraus ein Zielobjekt (ZO) identifiziert; einen ersten Bewegungsprädiktionsabschnitt (182), der aus der erfassten Bewegung des Ego-Fahrzeuges (100), zu einem Prädiktionszeitpunkt $t_p$ und in Abhängigkeit der Geschwindigkeitsregelungsfunktion (ACC) eine virtuelle Trajektorie (108) des Ego-Fahrzeuges (100) für einen in der Zukunft liegenden Zeitpunkt ermittelt; einen Verlustprädiktionsabschnitt (183), der zum Prädiktionszeitpunkt $t_p$ ein Zielobjektverlust (ZOV) des vorausfahrenden Zielfahrzeuges (101), in Abhängigkeit von dessen erfasster Bewegung und der virtuellen Trajektorie (180) des Ego-Fahrzeuges (100), für einen in der Zukunft liegenden Zeitpunkt vorherbestimmt und jenen vorherbestimmten Zielobjektverlust (ZOV) in einen trivialen Zielobjektverlust (t-ZOV) oder einen nicht-trivialen Zielobjektverlust (Nt-ZOV) kategorisiert; einen zweiten Bewegungsprädiktionsabschnitt (184), der zum Prädiktionszeitpunkt $t_p$ eine virtuelle Trajektorie (109) des als Zielobjekt (ZO) identifizierten, vorausfahrenden Fahrzeuges (101), in Abhängigkeit der erfassten Bewegung des vorausfahrenden Zielfahrzeuges (101) und des vorherbestimmten, kategorisierten Zielobjektverlustes (ZOV), für einen in der Zukunft liegenden Zeitpunkt ermittelt; sowie einen Geschwindigkeitsregelungsabschnitt (185), der die Geschwindigkeit des Ego-Fahrzeuges (100), in Abhängigkeit des vorherbestimmten, kategorisierten Zielobjektverlustes (ZOV) und der ermittelten deformierten, virtuellen Trajektorie (109) des als Zielobjekt (ZO) identifizierten, vorausfahrenden Fahrzeuges (101) regelt.

2. Vorrichtung nach Anspruch 1, **dadurch gekennzeichnet, dass** der Erfassungsabschnitt (181) technische Komponenten einer Erfassungssensorik (103) und einer Fahrzeugsensorik (141) umfasst, wobei die Erfassungssensorik (103) eine oder mehrere Komponenten, wie eine Kamera, einen RADAR- oder einen LiDAR-Sensor umfasst und wobei die Fahrzeugsensorik (141) eine oder mehrere der Komponenten wie einen Raddrehzahlsensor, einen Lenkradwinkelsensor, einen Drehratensensor und einen Querbeschleunigungssensor umfasst.

3. Vorrichtung nach Anspruch 2, **dadurch gekennzeichnet, dass** die Erfassung der Bewegung des Ego-Fahrzeuges (100) die Ermittlung der aktuellen Kurskrümmung $\kappa$, der Fahrzeugbeschleunigung x"und der Kurvengeschwindigkeit $v_{c,p}$ umfasst, sowie, dass die Identifikation eines Zielobjektes (ZO) die Zuordnung eines Fahrkorridors zum Ego-Fahrzeug (100), in Abhängigkeit einer oder mehrerer Berechnungsgrößen umfasst, wie einer Korridorbreite $b_{corr}$, einer örtlichen Hysterese der Korridorbreite $b_{corr}$, einer Zielplausibilität, einer Änderung der Zielplausibilität, eines geschwindigkeitsabhängigen Abstandes, eines Abstandes zur Kursmitte des Ego-Fahrzeuges (100) und einer Sollbeschleunigung des Ego-Fahrzeuges (100).

4. Vorrichtung nach einem der vorherigen Ansprüche, **dadurch gekennzeichnet, dass** der erste Bewegungsprädiktionsabschnitt (182) eine prädizierte Kurskrümmung $\kappa_{pred}$ für einen in der Zukunft liegenden Zeitpunkt als die virtuelle Trajektorie (108) des Ego-Fahrzeuges (100) ermittelt, wobei die prädizierte Kurskrümmung $\kappa_{pred}$ aus der Vorhersage des Streckenverlaufes des Ego-Fahrzeuges (100) abgeleitet wird.

5. Vorrichtung nach Anspruch 4, **dadurch gekennzeichnet, dass** der erste Bewegungsprädiktionsabschnitt (182) ein Encoder-Decoder-LSTM-Netzwerk, mit einer Eingabeschicht für Stichproben der Dimension (100, 2), einer Encoder-Schicht, umfassend eine LSTM-Zelle mit 50 Einheiten, einen RepeatVector, umfassend eine Länge von 50 Einheiten, eine Decoder-Schicht, umfassend 50 Einheiten sowie eine Ausgabeschicht, umfassend eine dichte Schicht mit 50 Einheiten umfasst, wobei jede Schicht mit der Tangenshyperbolicus-Funktion aktiviert wird und, das eingerichtet ist, um mittels Erfassungssensorik (103) oder Positionsdaten globaler oder lokaler Koordinatensysteme erfasste, zweidimensionale x- und y-Koordinaten des vorangegangenen Streckenverlaufs der letzten 100 Meter Fahrt als Eingangsgrößen zu erhalten und daraus 50 Meter des zukünftigen Streckenverlaufes des Ego-Fahrzeuges (100) vorherzubestimmen.

6. Vorrichtung nach einem der vorherigen Ansprüche, **dadurch gekennzeichnet, dass** der Verlustprädiktionsabschnitt (183) die Zeitreihendaten von wenigstens sechs, der während der Fahrt, durch die Erfassungssensorik (103) und die Fahrzeugsensorik (141) des Ego-Fahrzeuges (100) aufgenommenen Messdaten und Signale, umfassend die ACC-Sollbeschleunigung (S01), die ACC-Zielobjekterkennung (S02), die Relativgeschwindigkeit zwischen Ego-Fahrzeug (100) und Zielobjekt (ZO) (S03), den Abstand zum Zielfahrzeug (S04), die Geschwindigkeit des Ego-Fahrzeuges (100) (S05) sowie die Beschleunigung des Ego-Fahrzeuges (100) (S06) als Eingangsgrößen empfängt und daraus einen Zielobjektverlust (ZOV) für einen in der Zukunft liegenden Zeitpunkt vorherbestimmt.

7. Vorrichtung nach Anspruch 6, **dadurch gekennzeichnet, dass** der Verlustprädiktionsabschnitt (183) zusätzlich die Zeitreihendaten von wenigstens 5 weiteren, der während der Fahrt, durch die Erfassungssensorik (103) und die Fahrzeugsensorik (141) des Ego-Fahrzeuges (100) aufgenommenen Messdaten und Signale, umfassend die Beschleunigung des Ego-Fahrzeuges (100), welche durch die Leistungsübertragung (130) umgesetzt wird (S07), das Soll-Antriebsmoment der Antriebseinheit (120) (S08), das Ist-Raddrehmoment (S09), den Zeitstempel für die Erfassungssensorik (103) (S10) sowie die Antriebsmomentbegrenzung (S11) als Eingangsgrößen empfängt und daraus einen Zielobjektverlust (ZOV) für einen in der Zukunft liegenden Zeitpunkt vorherbestimmt.

8. Vorrichtung nach einem der Ansprüche 6 oder 7, **dadurch gekennzeichnet, dass** der Verlustprädiktionsabschnitt (183) ein RNN-LSTM-Modell umfasst, umfassend eine dichte Schicht als Eingabeschicht, die eine Anzahl an Einheiten umfasst, welche der Anzahl der Eingangsgrößen entspricht, eine erste verstreckte Schicht, umfassend eine LSTM-Zelle mit 256 Einheiten, eine zweite versteckte Schicht, umfassend eine LSTM-Zelle mit 64 Einheiten und eine dichte Schicht als Ausgabeschicht, mit 3 Einheiten, wobei die versteckten Schichten mit einer selu-Funktion und die Ausgabeschicht mit einer softmax-Funktion aktiviert werden und wobei die Initialisierung mittels Glorot-Normalverteilung erfolgt.

9. Vorrichtung nach einem der vorherigen Ansprüche, **dadurch gekennzeichnet, dass** die Ermittlung der virtuellen Trajektorie (109) des vorausfahrenden Zielfahrzeuges (101) durch den zweiten Bewegungsprädiktionsabschnitt (184), die Vorherbestimmung der Eintrittsgeschwindigkeit $v_{in}$, der Eintrittsbeschleunigung $a_{in}$ und des Eintrittszeitpunktes $t_{in}$ der Wiedererkennung (ZOE) des vorausfahrenden Zielfahrzeuges (101) zum Prädiktionszeitpunkt $t_p$ umfasst, die mittels einer häufigkeitsverteilungsbasierten Transfermatrix, in Abhängigkeit der Austrittsgeschwindigkeit $v_{out}$ und der Austrittsbeschleunigung $a_{out}$ des vorausfahrenden Zielfahrzeuges (101) geschätzt werden, wobei die Austrittsgeschwindigkeit $v_{out}$ und die Austrittsbeschleunigung $a_{out}$ mittels Extrapolation vorangegangener Messdaten für die Geschwindigkeit $v_f$ und Beschleunigung $a_f$ des vorausfahrenden Zielfahrzeuges (101), die durch den Erfassungsabschnitt (181) aufgenommen wurden, auf den Austrittszeitpunkt $t_{out}$, ermittelt werden, der durch den Verlustprädiktionsabschnitt (183) zum Prädiktionszeitpunkt $t_p$ vorherbestimmt wurde.

10. Vorrichtung nach einem der vorherigen Ansprüche, **dadurch gekennzeichnet, dass** der Geschwindigkeitsregelungsabschnitt (185) Informationen an die Antriebssteuereinrichtung (160) und/oder an die Leistungsübertragungseinrichtung (170) übermittelt, um das Ego-Fahrzeug (100) zu regeln, um eine Beschleunigung zu verhindern und die Geschwindigkeit des Ego-Fahrzeuges (100) so einzustellen, um einen voreingestellten Sollabstand zu einem als Zielobjekt (ZO) identifizierten vorausfahrenden Fahrzeug (101) herbeizuführen, immer dann, wenn kein Zielobjektverlust (ZOV) vorherbestimmt wurde, oder, um einen voreingestellten Sollabstand zu einer deformierten, virtuellen Trajektorie (109) des als Zielobjekt (ZO) identifizierten vorausfahrenden Fahrzeuges (101) herbeizuführen, immer dann, wenn ein Zielobjektverlust (ZOV) vorherbestimmt und dieser als ein nicht-trivialer Zielobjektverlust (nt-ZOV) kategorisiert wurde, oder, um eine Beschleunigung zu aktivieren und die Geschwindigkeit des Ego-Fahrzeuges (100) auf eine voreingestellte Soll-Geschwindigkeit zu regeln, immer dann, wenn ein Zielobjektverlust (ZOV) vorherbestimmt und dieser als ein trivialer Zielobjektverlust (t-ZOV) kategorisiert wurde oder, wenn kein vorausfahrendes Zielfahrzeug (101) als Zielobjekt (ZO) identifiziert wurde.

11. Verfahren zur Regelung der Geschwindigkeit eines Ego-Fahrzeuges (100), durch Ausführung einer Geschwindigkeitsregelungsfunktion (ACC), um das Ego-Fahrzeug (100) in einer Folgefahrt, in Abhängigkeit der Fahrt eines vorausfahrenden Zielfahrzeuges (101) zu regeln **(S100),** wobei die Bewegung des Ego-Fahrzeuges (100) und eines oder mehrerer vorausfahrender Zielfahrzeuge (101) erfasst und daraus ein Zielobjekt (ZO) identifiziert wird **(S110),** wobei aus der erfassten Bewegung des Ego-Fahrzeuges (100), zu einem Prädiktionszeitpunkt $t_p$, in Abhängigkeit der Geschwindigkeitsregelungsfunktion (ACC) eine virtuelle Trajektorie (108) des Ego-Fahrzeuges (100) für einen in der Zukunft liegenden Zeitpunkt ermittelt wird **(S120),** wobei zum Prädiktionszeitpunkt $t_p$ ein Zielobjektverlust (ZOV) des vorausfahrenden Zielfahrzeuges (101), in Abhängigkeit von dessen erfasster Bewegung und der virtuellen Trajektorie (108) des Ego-Fahrzeuges (100), für einen in der Zukunft liegenden Zeitpunkt vorherbestimmt **(S130)** und jener vorherbestimmte Zielobjektverlust (ZOV) in einen trivialen Zielobjektverlust (t-ZOV) oder einen nicht-trivialen Zielobjektverlust (Nt-ZOV) kategorisiert wird **(S132),** wobei zum Prädiktionszeitpunkt $t_p$ eine virtuelle Trajektorie (109) des als Zielobjekt (ZO) identifizierten, vorausfahrenden Zielfahrzeuges (101), in Abhängigkeit der erfassten Bewegung des vorausfahrenden Zielfahrzeuges (101) und des vorherbestimmten, kategorisierten Zielobjektverlustes (ZOV), für einen in der Zukunft liegenden Zeitpunkt ermittelt wird **(S140)** und, wobei die Geschwindigkeit des Ego-Fahrzeuges (100), in Abhängigkeit des vorherbestimmten, kategorisierten Zielobjektverlustes (ZOV) und der ermittelten virtuellen Trajektorie (109) des als Zielobjekt (ZO) identifizierten, vorausfahrenden Zielfahrzeuges (101) geregelt wird.

12. Verfahren nach Anspruch 11, **dadurch gekennzeichnet, dass** die Geschwindigkeit des Ego-Fahrzeuges (100) geregelt wird, um eine Beschleunigung zu verhindern und die Geschwindigkeit des Ego-Fahrzeuges (100) so einzustellen, um einen voreingestellten Sollabstand zu einem als Zielobjekt (ZO) identifizierten vorausfahrenden Fahrzeug (101) herbeizuführen, immer dann, wenn kein Zielobjektverlust (ZOV) vorherbestimmt wurde, oder, um einen voreingestellten Sollabstand zu einer deformierten, virtuellen Trajektorie (109) des als Zielobjekt (ZO) identifizierten vorausfahrenden Fahrzeuges (101) herbeizuführen, immer dann, wenn ein Zielobjektverlust (ZOV) vorherbestimmt und dieser als ein nicht-trivialer Zielobjektverlust (nt-ZOV) kategorisiert wurde, oder, um eine Beschleunigung zu aktivieren und die Geschwindigkeit des Ego-Fahrzeuges (100) auf eine voreingestellte Soll-Geschwindigkeit zu regeln, immer dann, wenn ein Zielobjektverlust (ZOV) vorherbestimmt und dieser als ein trivialer Zielobjektverlust (t-ZOV) kategorisiert wurde oder, wenn kein vorausfahrendes Zielfahrzeug (101) als Zielobjekt (ZO) identifiziert wurde.

13. Verfahren nach einem der Ansprüche 11 und 12, das durch eine Vorrichtung nach einem der Ansprüche 1 bis 10 ausgeführt wird.

14. Fahrzeug, umfassend eine Fahrtregelungsvorrichtung (180) nach einem der Ansprüche 1 bis 10, das eingerichtet ist, ein Verfahren nach einem der Ansprüche 11 bis 13 auszuführen.

Fig. 1A

Fig. 1B

Fig. 1C

Fig. 2A

Fig. 2B

Fig. 2C

| Input Layer | Input: [(?, 100, 2)] |
|---|---|
| | Output: [(?, 100, 2)] |

| Encoder: LSTM | Input: [(?, 100, 2)] |
|---|---|
| | Output: [(?, 50), (?, 50), (?, 50, 50)] |

| Repeat Vector | Input: [(?, 50)] |
|---|---|
| | Output: [(?, 50, 50)] |

| Decoder: LSTM | Input: [(?, 50, 50), (?, 50), (?, 50, 50)] |
|---|---|
| | Output: [(?, 50, 50)] |

| Output Layer: time distributed (Dense) | Input: [(?, 50, 50)] |
|---|---|
| | Output: [(?, 50, 2)] |

**Fig. 3**

EP 4 588 744 A1

| Eingabe-schicht | Typ: Dichte Schicht |
| | Einheiten: 23* |

| Erste versteckte Schicht | Typ: LSTM |
| | Einheiten: 23 |
| | Aktivierung: „selu" |

| Zweite versteckte Schicht | Typ: LSTM |
| | Einheiten: 23 |
| | Aktivierung: „selu" |

| Ausgabe-schicht | Typ: Dichte Schicht |
| | Einheiten: 3 |
| | Aktivierung: „softmax" |

**Fig. 4**

**Fig. 5**

30

START

ACC-Funktion aktiviert — S100

vorausfahrendes Fahrzeug erfasst? — S110 → nein

ja

Trajektorie Ego-Fahrzeug ermitteln — S120

ZOV vorherbestimmen — S130

ZOV vorherbestimmt? — S131 → nein

ja

ZOV kategorisieren — S132

nt-ZOV kategorisiert? — S133 → nein

ja

Virtuelle Trajektorie ZO vorherbestimmen — S140

S150 — Auf Soll-Abstand regeln

S160 — Auf Soll-Geschwindigkeit regeln

ENDE

Fig. 6

**Fig. 7A**

**Fig. 7B**

**EUROPÄISCHER RECHERCHENBERICHT**

Nummer der Anmeldung

EP 24 15 4496

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2009 055787 A1 (GM GLOBAL TECH OPERATIONS INC [US]) 26. Mai 2011 (2011-05-26) * Absätze [0024] - [0043] * ----- | 1,11 | INV. B60W30/16 B60W30/18 B60W50/00 |
| A | WO 2017/151034 A1 (SCANIA CV AB [SE]) 8. September 2017 (2017-09-08) * Seite 4, Zeilen 7-20 * * Seite 10, Zeile 17 - Seite 12, Zeile 19; Ansprüche 1,2; Abbildungen 1-2c * * das ganze Dokument * ----- | 1,11 | |
| A | FR 3 123 865 A1 (PSA AUTOMOBILES SA [FR]) 16. Dezember 2022 (2022-12-16) * Absätze [0005], [0006], [0018] - [0026] * ----- | 1,11 | |
| A | DE 102 54 424 A1 (LUCAS AUTOMOTIVE GMBH [DE]) 3. Juni 2004 (2004-06-03) * Absätze [0005] - [0009], [0040] - [0044], [0076] - [0079], [0104] - [0107], [0140] - [0142]; Abbildungen 5,9 * ----- | 1,11 | RECHERCHIERTE SACHGEBIETE (IPC) B60W |
| A | DE 10 2013 216994 A1 (BOSCH GMBH ROBERT [DE]) 5. März 2015 (2015-03-05) * Absätze [0010], [0034] - [0037]; Abbildung 3 * ----- | 1,11 | |
| A | US 2009/055069 A1 (LINDQVIST KRISTIAN [SE] ET AL) 26. Februar 2009 (2009-02-26) * Absätze [0014], [0022], [0044] - [0053]; Abbildungen 1,5 * ----- | 1,11 | |

Der vorliegende Recherchenbericht wurde für alle Patentansprüche erstellt

| Recherchenort | Abschlußdatum der Recherche | Prüfer |
|---|---|---|
| München | 4. Juni 2024 | Plenk, Rupert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 15 4496

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2024

| Im Recherchenbericht angeführtes Patentdokument | Datum der Veröffentlichung | Mitglied(er) der Patentfamilie | | Datum der Veröffentlichung |
|---|---|---|---|---|
| DE 102009055787 A1 | 26-05-2011 | KEINE | | |
| WO 2017151034 A1 | 08-09-2017 | EP | 3423325 A1 | 09-01-2019 |
| | | SE | 1650271 A1 | 03-09-2017 |
| | | WO | 2017151034 A1 | 08-09-2017 |
| FR 3123865 A1 | 16-12-2022 | KEINE | | |
| DE 10254424 A1 | 03-06-2004 | AT | E383967 T1 | 15-02-2008 |
| | | AU | 2003288144 A1 | 15-06-2004 |
| | | DE | 10254424 A1 | 03-06-2004 |
| | | EP | 1562778 A1 | 17-08-2005 |
| | | ES | 2299739 T3 | 01-06-2008 |
| | | US | 2005240335 A1 | 27-10-2005 |
| | | WO | 2004045896 A1 | 03-06-2004 |
| DE 102013216994 A1 | 05-03-2015 | CN | 104527643 A | 22-04-2015 |
| | | DE | 102013216994 A1 | 05-03-2015 |
| | | US | 2015066329 A1 | 05-03-2015 |
| US 2009055069 A1 | 26-02-2009 | BR | PI0619430 A2 | 04-10-2011 |
| | | CN | 101326073 A | 17-12-2008 |
| | | EP | 1963128 A1 | 03-09-2008 |
| | | SE | 528567 C2 | 19-12-2006 |
| | | US | 2009055069 A1 | 26-02-2009 |
| | | WO | 2007069996 A1 | 21-06-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005032182 A1
- DE 102007031544 A1
- DE 102017007504 A1